(19) Europäisches Patentamt
European Patent Office
Office européen des brevets

(11) Veröffentlichungsnummer : **0 308 664 B1**

(12) # EUROPÄISCHE PATENTSCHRIFT

(45) Veröffentlichungstag der Patentschrift : **28.08.91 Patentblatt 91/35**

(21) Anmeldenummer : **88113696.4**

(22) Anmeldetag : **23.08.88**

(51) Int. Cl.$^5$ : **C08L 9/00,** C08L 75/00, C08L 63/00, C09J 163/00, C09J 175/00, C09J 109/00, // (C08L9/00, 75:00, 63:00), (C08L75/00, 9:00, 63:00), (C08L63/00, 9:00, 75:00)

(54) **Modifizierte Epoxidharze.**

(30) Priorität : **26.08.87 CH 3265/87**
**21.03.88 CH 1069/88**

(43) Veröffentlichungstag der Anmeldung : **29.03.89 Patentblatt 89/13**

(45) Bekanntmachung des Hinweises auf die Patenterteilung : **28.08.91 Patentblatt 91/35**

(84) Benannte Vertragsstaaten : **BE CH DE ES FR GB IT LI NL SE**

(56) Entgegenhaltungen :
**FR-A- 2 156 910**
**US-A- 4 096 200**

(73) Patentinhaber : **CIBA-GEIGY AG**
**Klybeckstrasse 141**
**CH-4002 Basel (CH)**

(72) Erfinder : **Mülhaupt, Rolf, Dr.**
**Chemin de la Prairie 2**
**CH-1723 Marly (CH)**
Erfinder : **Powell, Jeremy Hugh**
**Wapentake Linton Road**
**Horseheath Cambridge CB1 6QF (GB)**
Erfinder : **Adderley, Christopher Stewart**
**5 Limes Road**
**Hardwick Cambridge CB3 7QR (GB)**
Erfinder : **Rüfenacht, Werner**
**rte des Praletts 23**
**CH-1723 Marly (CH)**

(74) Vertreter : **Zumstein, Fritz, Dr. et al**
**Bräuhausstrasse 4**
**W-8000 München 2 (DE)**

EP 0 308 664 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Gemische aus speziellen Dien-Copolymeren und phenol-terminierten Polyurethanen oder Polyharnstoffen, Gemische dieses Typs enthaltend Epoxidharze und/oder Addukte von Epoxidharzen an das Dien-Copolymere und/oder das Polyurethan oder den Polyharnstoff, die vernetzten Produkte aus diesen Gemischen, ein Verfahren zur Härtung der Gemische, sowie die Verwendung der Mehrkomponentengemische als Klebstoffe, insbesondere als Strukturkleber.

Aus der DE-A-2,152,606 sind Gemische aus Epoxidharzen und phenol-verkappten Polyurethanen bekannt. Die Polyurethane werden durch Umsetzung von präpolymeren Diisocyanaten mit gegebenenfalls substituierten Monophenolen erhalten. Die Produkte besitzen keine freien, phenolischen Hydroxylgruppen mehr. Sie werden zusammen mit Epoxidharzen und Polyaminhärtern zur härtbaren Beschichtungsmitteln kombiniert, die sich durch besondere Elastizität auszeichnen.

Aus der US-A-4,423,201 sind wasserlösliche oder teilweise wasserlösliche phenol-terminierte Polyurethane bekannt, die sich von wasserlöslichen oder teilweise wasserlöslichen Polyalkylenglykolen, Diisocyanaten und Bisphenolen ableiten. Diese Verbindungen werden zusammen mit Epoxidharzen und Phenolen zu wasserdispergierbaren Epoxidharzen umgesetzt. Die modifizierten Epoxidharze lassen sich als Beschichtungsmittel einsetzen. Aus der US-A-3,442,974 sind lagerstabile Epoxidzusammensetzungen bekannt, die ein mit einem Mono- oder Polyphenol blockiertes Polyisocyanat enthalten. Es werden keine phenol-verkappten Polyisocyanate beschrieben, welche elastomere Eigenschaften besitzen.

Ferner sind aus der EP-A-247,476 Hydroxyphenylurethane bekannt, die sich als Antioxidantien oder als Zwischenprodukte zur Herstellung von Polykondensaten oder von Polyaddukten einsetzen lassen.

Ferner ist bekannt, dass Epoxidharze durch Zusatz von Copolymeren auf Basis von Butadien und Acrylnitril oder durch Zusatz von Addukten solcher Copolymerer an Epoxidharze modifiziert werden können.

Solche Zusätze bewirken im allgemeinen eine Erhöhung der Schlagzähigkeit und der Flexibilität des gehärteten Produktes. Die Schälfestigkeit lässt im allgemeinen aber zu wünschen übrig. In der Regel werden durch den Einbau solcher Polymerer die Zugscherfestigkeit sowie die Glasübergangstemperatur reduziert.

Es wurden jetzt Kombinationen von Schlagzähigkeits-Modifikatoren gefunden, die im Gemisch mit Epoxidharzen eine signifikante Erhöhung der Schälfestigkeit bewirken, eine verringerte Tendenz zur Rissfortpflanzung aufweisen und hohe Schälfestigkeiten ohne Verlust der Zugscherfestigkeit ermöglichen.

Ferner lassen sich mit diesen Modifikatoren, je nach Harzformulierung, elastische Produkte mit hoher Schälfestigkeit und tiefer Glasübergangstemperatur oder hochfeste Produkte mit hoher Glasübergangstemperatur und hoher Schälfestigkeit herstellen ; die hochfesten Produkte zeichnen sich durch hohe Risszähigkeiten aus und die Rissfortpflanzung ist auch bei sehr hoher, schockartiger Schlagbeanspruchung deutlich herabgesetzt.

Vorbekannte Produkte auf Basis von Epoxidharzen und Butadien-Copolymeren enthalten in der Regel keine hohen Anteile der flexibilisierenden Komponente, da sich Gemische mit einem hohen Flexibilisatorgehalt nicht oder nur ungenügend härten lassen.

Es wurde nun gefunden, dass sich Gemische von Epoxidharzen und hohen Anteilen an Butadien-Copolymeren in Kombination mit speziellen phenolterminierten Polyurethanen oder Polyharnstoffen härten lassen, und sich somit hochflexible Produkte herstellen lassen.

Die vorliegende Erfindung betrifft Zusammensetzungen enthaltend

A) ein Copolymeres auf Basis von mindestens einem 1,3-Dien und mindestens einem polaren, ethylenisch ungesättigten Comonomeren, und

B) eine Verbindung der Formel I

$$R^1 - \left[ X - \overset{O}{\overset{\|}{C}} - Y - R^2 - (OH)_m \right]_n \qquad (I),$$

worin m 1 oder 2 ist, n 2 bis 6 bedeutet, $R^1$ der n-wertige Rest eines in Epoxidharzen löslichen oder dispergierbaren, elastomeren Präpolymeren nach dem Entfernen der endständigen Isocyanat-, Amino- oder Hydroxylgruppen ist,

X und Y unabhängig voneinander —O— oder —$NR^3$— bedeuten, wobei mindestens eine dieser Gruppen —$NR^3$— sein muss,

$R^2$ ein m + 1-wertiger Rest eines Polyphenols oder Aminophenols nach dem Entfernen der phenolischen Hydroxylgruppen und gegebenenfalls der Aminogruppe ist, und

$R^3$ Wasserstoff, $C_1$-$C_6$Alkyl oder Phenyl bedeutet.

Beispiele für 1,3-Diene zur Herstellung von Komponente A) sind Butadien, Isopren und Chloropren. Bevorzugt sind Copolymere auf Butadienbasis.

Beispiele für polare, ethylenisch ungesättigte Comonomere zur Herstellung von Komponente A) sind Acrylsäure, Methacrylsäure, Ester der Acryl- oder Methacrylsäure, beispielsweise die Methyl- oder Ethylester, Amide der Acryl- oder Methacrylsäure, Fumarsäure, Itaconsäure, Maleinsäure oder deren Ester oder Halbester, beispielsweise die Mono- oder Dimethylester, oder Maleinsäure- oder Itaconsäureanhydrid ; Vinylester, beispielsweise Vinylacetat, polare Styrole, wie kernchlorierte oder kernbromierte Styrole, oder insbesondere Acrylnitril oder Methacrylnitril.

Neben polaren ethylenisch ungesättigten Comonomeren kann Komponente A) noch weitere unpolare, ethylenisch ungesättigte Comonomere enthalten. Beispiele dafür sind Ethylen, Propylen oder insbesondere Styrol oder substituierte Styrole, wie Vinyltoluol.

Bei Komponente A) kann es sich um statistische Copolymere, Block-Copolymere oder um Pfropf-Copolymere handeln.

Diese Komponente kann fest, insbesondere pulverförmig, oder bevorzugt flüssig sein. Ferner kann es sich dabei um Thermoplasten, thermoplastische Elastomere oder Elastomere handeln.

Der Anteil der Comonomeren in Komponente A) kann in weiten Bereichen schwanken. Diese Komponente wird so gewählt, dass sich in Kombination mit Komponente B) und gegebenenfalls einem Epoxidharz C) eine Elastomerphase ausbildet. Dabei kann es sich um homogene oder heterogene Systeme handeln.

Eine Elastomerphase kann bereits in Komponente A) vorhanden sein, beispielsweise bei Verwendung eines Polybutadien-Pfropf-Copolymeren ; die Elastomerphase kann aber auch erst durch Auswahl geeigneter Komponenten A), B) und gegebenenfalls C) entstehen.

Wünscht man heterogene Systeme, so werden die Komponenten in der Regel so gewählt, dass die Differenz der Löslichkeitsparameter von A) und/oder B) zu C) zwischen 0,2 und 1,0, bevorzugt zwischen 0,2 und 0,6, liegt. Diese Auswahlkriterien sind beispielsweise in C.B. Bucknall in "Toughened Plastics", Kapitel 2, Applied Science Publishers Ltd., London 1977 beschrieben.

Bevorzugte Komponenten A) sind Copolymere auf Basis von Butadien-Acrylnitril, Butadien-(Meth)acrylsäureestern, Butadien-Acrylnitril-Styrol Pfropfcopolymere (ABS), insbesondere ABS-Pulver, und Butadien-Methyl-methacrylat-Styrol Propfcopolymere (MBS).

Besonders bevorzugte Komponenten A) sind Copolymere, die erhältlich sind durch Pfropfcopolymerisation von polaren, ethylenisch ungesättigten Comonomeren auf Polybutadienmikrogele.

Ganz besonders bevorzugte Komponenten A) sind flüssige Butadien-Copolymere mit polaren, ethylenisch ungesättigten Comonomeren, insbesondere flüssige Butadien-Acrylnitril-Copolymere.

Die Molekulargewichte dieser bevorzugten flüssigen Butadien-Copolymeren betragen vorzugsweise 500-5000, insbesondere 1000-3000.

Weitere ganz besonders bevorzugte Komponenten A) sind Butadien-Acrylnitril-Copolymere mit gegenüber Epoxidharzen reaktiven funktionellen Gruppen.

Beispiele für solche Copolymeren sind carboxyl- oder hydroxyl- oder aminhaltige Acrylnitril-Butadien-Kautschuke, beispielsweise Verbindungen vom Typ Hycar® der Fa. Goodrich.

Bevorzugte Typen solcher Kautschuke enthalten die Strukturelemente der folgenden Formeln IIa bis IId und die Endgruppen Q

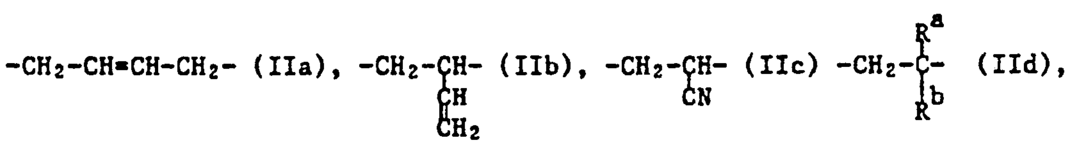
(IIa), (IIb), (IIc) (IId),

worin $R^a$ Wasserstoff oder Methyl ist, $R^b$ —COOH, —$COOR^c$ oder —$CONH_2$ bedeutet, $R^c$ ein aliphatischer Rest, vorzugsweise Methyl, ist, und Q ausgewählt wird aus der Gruppe bestehend aus —R-COOH, —R-OH und

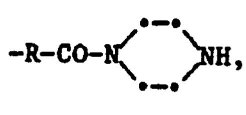

worin R ein Alkylenrest ist ; der Anteil der Reste IIa und IIb beträgt vorzugsweise 5-50 Gew.%, der Anteil der Rests Ic beträgt vorzugsweise 5-50 Gew.%, der Anteil des Rests IId beträgt vorzugsweise 0-30 Gew.%, bei Resten mit freien Carboxylgruppen bevorzugt 0-10 Gew.%, wobei die Mengenangaben auf die Gesamtmenge

der Reste IIa, IIb, IIc und gegebenenfalls IId bezogen sind.

Komponente A) kann auch in Form eines Adduktes eines Butadien-Acrylnitril-Copolymeren mit gegenüber Epoxidharzen reaktiven funktionellen Gruppen an ein Epoxidharz eingesetzt werden.

Die Herstellung solcher Addukte erfolgt in an sich bekannter Weise durch Erhitzen des reaktiven Acrylnitril-Butadien-Kautschuks und des Epoxidharzes mit gegebenenfalls einem Katalysator, so dass ein schmelzbares aber noch härtbares Vorkondensat entsteht.

Als Katalysator verwendet man beispielsweise Triphenylphosphin, tertiäre Amine, quaternäre Ammonium- oder Phosphoniumsalze oder Chrom-Acetylacetonat.

Die Erfindung betrifft auch Zusammensetzungen enthaltend A) ein Addukt eines Acrylnitril-Butadien-Kautschuks mit gegenüber Epoxidharzen reaktiven funktionellen Gruppen an ein Epoxidharz, und B) eine phenolterminierte Verbindung der Formel I, wie oben definiert.

Komponente B) ist ein ausgewähltes Polyurethan oder ein ausgewählter Polyharnstoff, die sich von einem speziellen Präpolymeren ableiten. Unter einem "elastomeren Präpolymerrest $R^1$" versteht man im Rahmen dieser Beschreibung einen mit n-Isocyanat-, -Amino- oder -Hydroxylgruppen terminierten Rest eines Präpolymeren, der nach der Verkappung dieser Gruppen zu einer Verbindung der Formel I führt, welche in Kombination mit der Dienkomponente A) und Epoxidharzen C) nach der Härtung eine Elastomerphase oder eine Mischung von Elastomerphasen ergibt. Dabei kann es sich um homogene oder um heterogene Kombinationen von Komponenten A), B) und C) handeln. Die Elastomerphase(n) ist (sind) in der Regel durch eine Glasübergangstemperatur von weniger als 0°C gekennzeichnet. Unter einem "in Epoxidharzen löslichen oder dispergierbaren Präpolymeren" versteht man im Rahmen dieser Beschreibung einen mit n-Isocyanat-, -Amino- oder -Hydroxylgruppen terminierten Rest eines Präpolymeren, der nach der Verkappung dieser Gruppen zu einer Verbindung der Formel I führt, die in einem Epoxidharz C) oder in einer Kombination eines Epoxidharzes C) und eines Dien-Copolymeren A) löslich oder ohne weitere Hilfsmittel, wie z.B. Emulgatoren, dispergierbar ist; wobei sich also eine homogene Phase ausbildet oder wobei zumindest keine makroskopische Phasenseparation von einer der Komponenten A), B) oder C) oder von einem Gemisch besagter Komponenten stattfindet.

Im Falle von heterogenen Systemen sollte in der Regel die oben beschriebene Differenz der Löslichkeitsparameter von A) und/oder B) und/oder C) eingehalten werden.

Die Löslichkeit oder Dispergierbarkeit von B) in der Kombination von A) und C) wird in erster Linie durch die Auswahl geeigneter Präpolymerreste $R^1$ bewerkstelligt. Beispiele für geeignete Reste sind weiter unten bei der Herstellung der Komponente B) gegeben.

Vorzugsweise handelt es sich bei der Verbindung der Formel I um eine wasserunlösliche Verbindung. Darunter versteht man im Rahmen dieser Beschreibung eine Verbindung, die sich zu weniger als 5 Gew.%, vorzugsweise weniger als 0,5 Gew.%, in Wasser löst, und die bei der Wasserlagerung nur eine geringe Menge Wasser aufnimmt, vorzugsweise weniger als 5 Gew.%, insbesondere weniger als 0,5 Gew.%, oder dabei lediglich eine geringe Quellung zeigt.

Die $R^1$ zugrundliegenden Präpolymeren besitzen in der Regel Molekulargewichte (Zahlenmittel) von 150 bis 10000, vorzugsweise von 1800 bis 3000.

Die mittlere Funktionalität dieser Präpolymeren beträgt wenigstens zwei, bevorzugt 2 bis 3, und besonders bevorzugt 2 bis 2,5.

Der Begriff "elastomeres Polyurethan" oder "elastomerer Polyharnstoff" ist dem Fachmann an sich bekannt (vergl. C. Hepburn : "Polyurethane Elastomers", Applied Science Publishers, London 1982).

Elastomere Polyurethane oder Polyharnstoffe enthalten im allgemeinen starre und flexible Anteile (Hart- und Weichsegmente).

Bei Komponente B) kann es sich um flüssige oder um thermoplastische phenolterminierte Polyurethane oder Polyharnstoffe der Formel I handeln. Bevorzugt werden Verbindungen mit einer Erweichungstemperatur von weniger als 80°C, bevorzugt weniger als 40°C.

Komponente B) kann ebenfalls als ein Addukt eines phenol-terminierten Polyurethans oder Polyharnstoffs der Formel I an ein Epoxidharz eingesetzt werden. Solche Addukte können in der oben beschriebenen Weise hergestellt werden.

Für hochflexible Systeme werden Addukte solcher Polyurethane oder Polyharnstoffe mit Glycidylethern aliphatischer Diole, wie 1,4-Butandiol oder 1,6-Hexandiol, bevorzugt.

Geeignete Komponenten B) können im wesentlichen linear sein oder es handelt sich um verzweigte Typen. Der Vernetzungsgrad wird so gewählt, dass das Polymer kein makroskopisches Gel bildet. Dies wird in der Regel dann der Fall sein, wenn Komponente B) in einem polaren organischen Lösungsmittel oder in einem Epoxidharz löslich oder zumindest dispergierbar ist.

Die Verbindungen der Formel I, worin X —$NR^3$—, insbesondere —NH—, ist und Y —$NR^3$— oder insbesondere —NH— oder —O— bedeutet, lassen sich je nach der Natur der $R^1$ zugrundeliegenden Präpolymeren, auf unterschiedlichen Wegen herstellen.

Im Falle von präpolymeren Isocyanaten lassen sie sich durch Umsetzung von Verbindungen der Formel IIIa mit Polyphenolen oder Aminophenolen der Formel IVa herstellen (Verfahren a)

$$R^1-(NCO)_n \quad (IIIa), \qquad H-Y-R^2-(OH)_m \quad (IVa);$$

Polyharnstoffe der Formel I, worin X —NR³— ist und Y —NR³— bedeutet, lassen sich auch durch Umsetzung von präpolymeren Aminen der Formel IIIb mit Urethanen der Formel IVb herstellen (Verfahren b)

$$R^1-(NR^3H)_n \quad (IIIb), \qquad R^{11}-O-\overset{O}{\overset{\|}{C}}-NR^3-R^2-(OH)_m \quad (IVb);$$

Verbindungen der Formel I, worin X —NR³— ist und Y —NR³— oder —O-bedeutet und mit ortho- oder peri-Phenolen oder -Aminophenolen als Endgruppen lassen sich auch durch Umsetzung von Verbindungen der Formel IIIb mit cyclischen Carbonaten oder Urethanen der Formel IVc herstellen (Verfahren c)

$R^1-(NR^3H)_n$ (IIIb), 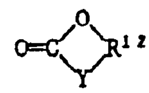 (IVc);

in diesen Formeln IIIa, IIIb, IVa, IVb und IVc besitzen die Reste $R^1$, $R^2$, $R^3$ und Y sowie die Indizes m und n die weiter oben definierte Bedeutung, $R^{11}$ ist ein als Abgangsgruppe fungierender Rest, beispielsweise Alkyl oder Aryl, insbesondere $C_1$-$C_6$Alkyl oder Phenyl, und $R^{12}$ ist ein zweiwertiger carbocyclisch-aromatischer Rest mit einer der für $R^2$ definierten Bedeutungen, an dem die Gruppen —O— und —Y— sich jeweils in ortho- oder peri-Stellung zueinander befinden.

Die Verbindungen der Formel I, worin X—O— und Y—$NR^3$— bedeutet, können in Analogie zu den in der EP-A-247,467 beschriebenen Verfahren erhalten werden.

Dazu setzt man beispielsweise ein in Epoxidharzen lösliches oder dispergierbares, elastomeres und hydroxyl-terminiertes Präpolymeres der Formel V mit einem dem OH-Gehalt des Präpolymeren entsprechenden Anteil eines Carbamates der Formel IVb, wie oben definiert um

$$R^1-(OH)_n \quad (V), \qquad R^{11}-O-\overset{O}{\overset{\|}{C}}-NR^3-R^2-(OH)_m \quad (IVb);$$

dabei besitzen die Reste $R^1$, $R^2$, $R^3$ und $R^{11}$ sowie die Indizes m und n die oben definierte Bedeutung.

In einer weiteren Ausführungsform kann man das Präpolymere der Formel V zunächst mit einem dem OH-Gehalt entsprechenden Anteil an Phosgen umsetzen und das entstandene Chlorcarbonyloxyderivat anschliessend mit einem Phenol oder Aminophenol der Formel IVa umsetzen.

Der Rest $R^2$ leitet sich im allgemeinen von Phenolen oder Aminophenolen mit einem ein- oder mehrkernigen carbocyclisch-aromatischen Rest ab.

Phenol- oder Aminophenolreste mit mehreren carbocyclisch-aromatischen Resten können kondensiert oder bevorzugt über Brückenglieder verknüpft sein.

Beispiele für Phenole oder Aminophenole mit kondensierten Resten sind Dihydroxynaphthaline oder -anthracene oder Aminonaphthole.

Bevorzugte Reste $R^2$ leiten sich von Bisphenolen der Formel VI ab

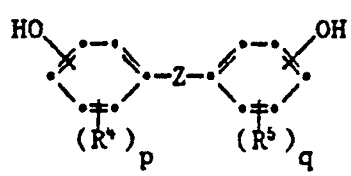 (VI),

worin Z eine direkte C-C-Bindung ist oder ein Brückenglied ausgewählt aus der Gruppe bestehend aus —$CR^6R^7$—, —O—, —S—, —$SO_2$—, —CO—, —COO—, —$CONR^8$— und —$SiR^9R^{10}$— ist, $R^4$ und $R^5$ unabhän-

gig voneinander $C_1$-$C_{20}$Alkyl, $C_2$-$C_6$Alkenyl, $C_2$-$C_6$Alkinyl oder Halogen darstellen, p und q unabhängig voneinander 0, 1 oder 2 bedeuten, $R^6$, $R^7$ und $R^8$ unabhängig voneinander Wasserstoff, $-CF_3$ oder $C_1$-$C_6$Alkyl sind oder $R^6$ und $R^7$ zusammen mit dem gemeinsamen C-Atom einen cycloaliphatischen Rest mit 5-12 Ring C-Atomen bilden und $R^9$ und $R^{10}$ $C_1$-$C_6$Alkyl bedeuten.

Besonders bevorzugte Reste $R^2$ leiten sich von Bisphenolen der Formel VI ab, worin die Hydroxylgruppen in 4,4'-Stellung gebunden sind ; besonders die Derivate, worin p und q 1 sind und $R^4$ und $R^5$ Allyl bedeuten.

Weitere besonders bevorzugte Reste $R^2$ leiten sich von Bisphenolen der Formel VI ab, worin Z ausgewählt wird aus der Gruppe bestehend aus $-CH_2-$, $-C(CF_3)_2-$, $-O-$, $-SO_2-$, einer direkten C-C Bindung und besonders $-C(CH_3)_2-$, p und q jeweils 0 oder 1 sind und $R^4$ und $R^5$ $C_1$-$C_6$Alkyl, $C_2$-$C_6$Alkenyl, besonders Allyl, oder $C_2$-$C_6$Alkinyl, besonders Propargyl, bedeuten.

Weitere bevorzugte Reste $R^2$ leiten sich von einkernigen Aminophenolen, beispielsweise von 2-, 3- oder 4-Aminophenol oder von einkernigen Polyphenolen, beispielsweise von Resorcin, Hydrochinon oder Pyrogallol, ab.

Besonders bevorzugte Reste $R^2$ leiten sich von Bisphenolen ab ; Beispiele dafür sind 4,4'-Dihydroxybiphenyl, Bis-(4-hydroxyphenyl)-ether, Bis-(4-hydroxyphenyl)-sulfon, Bis-(4-hydroxyphenyl)-methan, 2,2-Bis-(4-hydroxyphenyl)-propan sowie die entsprechenden 3,3'-Dimethyl-, 3,3'-Dinonyl-, oder 3,3'-Diallyl-, 3,3'-Dichlor-, 3,3'-Dibrom- und 3,3',5,5'-Tetrabromderivaten dieser Verbindungen.

Bedeuten $R^4$ oder $R^5$ $C_1$-$C_{20}$Alkyl, so handelt es sich dabei um geradkettige oder verzweigte Reste.

Beispiele dafür sind Methyl, Ethyl, n-Propyl, Isopropyl, n-Butyl, Isobutyl, tert.Butyl, n-Pentyl, n-Hexyl, 2-Ethylbutyl, n-Heptyl, n-Octyl, 2-Ethylhexyl, n-Nonyl, n-Decyl, n-Undecyl, n-Dodecyl, n-Tetradecyl, n-Hexadexyl, n-Octadecyl oder n-Eicosyl.

Vorzugsweise sind $R^4$ und $R^5$ $C_1$-$C_6$Alkyl, besonders bevorzugt geradkettiges $C_1$-$C_6$Alkyl und ganz besonders bevorzugt Methyl.

Bedeuten irgendwelche Reste $C_1$-$C_6$Alkyl, so handelt es sich dabei vorzugsweise um geradkettige Reste, also um Methyl, Ethyl, n-Propyl, n-Butyl, n-Pentyl oder n-Hexyl, ganz besonders jedoch Methyl.

$R^4$ und $R^5$ bedeuten als $C_2$-$C_6$Alkenyl beispielsweise Vinyl, Allyl, 1-Propenyl, 1-Butenyl, 1-Pentenyl oder 1-Hexenyl. Bevorzugt werden Vinyl, 1-Propenyl und Allyl, ganz besonders Allyl.

$R^4$ und $R^5$ bedeuten als $C_2$-$C_6$Alkinyl beispielsweise Ethinyl, Propargyl, 1-Butinyl, 1-Pentinyl oder 1-Hexinyl. Bevorzugt wird Propargyl.

Sind $R^4$ und $R^5$ Halogen, so kann es sich dabei um Fluor, Chlor, Brom oder Iod handeln. Bevorzugt werden Chlor oder Brom, insbesondere Brom.

Verbindungen der Formel VI mit Alkyl- oder Alkenylsubstituenten verwendet man bevorzugt, wenn die erfindungsgemässe Zusammensetzung eine hohe Haftfestigkeit auf öligem Stahl aufweisen soll.

Halogenhaltige Verbindungen der Formel VI erhöhen im allgemeinen die Flammfestigkeit.

Bilden $R^6$ und $R^7$ zusammen mit dem gemeinsamen C-Atom einen cycloaliphatischen Rest, so handelt es sich dabei beispielsweise um einen Cyclopentyliden-, Cyclohexyliden-, Cycloheptyliden-, Cyclooctyliden- oder Cyclododecylidenrest. Bevorzugt werden Cyclohexyliden und Cyclododecyliden.

$R^3$ ist vorzugsweise Wasserstoff.

Bei dem Isocyanat der Formel IIIa, handelt es sich entweder um ein Präpolymeres a1), das sich ableitet von einer Addition eines Polyisocyanats, bevorzugt eines Di- oder Triisocyanats, ganz besonders bevorzugt eines Diisocyanats, an eine präpolymere Polyhydroxyl- oder Polysulfhydrylkomponente oder an ein Gemisch solcher präpolymeren Komponenten gegebenenfalls in Kombination mit Kettenverlängerern (kurzkettigen Polyhydroxyl-, Polysulfhydryl- oder Polyaminverbindungen), oder um ein präpolymeres Polyisocyanat a2), das sich ableitet von einem präpolymeren Polyamin der Formel IIIb, insbesondere von einem präpolymeren Polyetheramin.

Präpolymere Komponenten zur Herstellung von a1) können Kondensations-oder Additionspolymere sein, die gegebenenfalls aufgepfropfte 1-Olefine enthalten können, wobei besagte 1-Olefine neben unpolaren auch polare Gruppen, wie Nitril-, Ester- oder Amidgruppen, aufweisen können. Beispiele für Polymere sind Polyester, Polyether, Polythioether, Polyacetale, Polyamide, Polyesteramide, Polyurethane, Polyharnstoffe, Alkydharze, Polycarbonate oder Polysiloxane, sofern diese Verbindungen hydroxyl- oder sulfhydryl-terminiert sind, zu in Epoxidharzen löslichen oder dispergierbaren Verbindungen der Formel I führen und diesen Elastomereigenschaften gemäss der obigen Definition verleihen.

Bevorzugt sind Polyether oder segmentierte Präpolymere enthaltend Polyethersegmente, wie Polyetheramide, Polyether-urethane und Polyether-harnstoffe.

Diese Verbindungen sind dem Fachmann auf dem Gebiet der Polyurethanchemie als Aufbaukomponenten für Polyurethane bekannt. Sie können linear oder verzweigt sein ; bevorzugt werden lineare Typen. Bevorzugte Aufbaukomponenten für Präpolymere a1) sind hydroxylterminierte Präpolymere mit mittleren Molekulargewichten (Zahlenmittel) von 150-10000, ganz besonders von 500-3000.

Bei der Herstellung der präpolymeren Polyisocyanate a1) können neben den hydroxyl- oder sulfhydryl-terminierten Präpolymeren auch noch Kettenverlängerer anwesend sein.

Solche Monomeren sind bevorzugt difunktionell oder trifunktionell.

Verwendet man tri- oder höherfunktionell hydroxyl- oder sulfhydryl-terminierte Präpolymere oder tri- oder höherfunktionelle Kettenverlängerer zur Herstellung der Komponente a1), so sind die Aufbaukomponenten so zu wählen, dass ein in organischen Lösungsmitteln lösliches oder zumindest quellbares Addukt a1) entsteht.

Der Vernetzungsgrad bei der Verwendung höherfunktioneller Aufbaukomponenten kann in an sich bekannter Weise durch Art und Mengenverhältnisse dieser Komponenten geregelt werden. Durch den Vernetzungsgrad können auch die Elastomereigenschaften in an sich bekannter Weise variiert werden.

So wird bei Einsatz von difunktionellen Präpolymeren und tri- oder höherfunktionellen Kettenverlängerern in der Regel nur ein geringer Anteil der höherfunktionellen Komponente eingesetzt, während bei der Kombination von di- und tri- oder höherfunktionellen Präpolymeren in der Regel eine grössere Menge des höherfunktionellen Kettenverlängerers anwesend sein kann, ohne dass eine übermässige Vernetzung eintritt. Ferner wird der Vernetzungsgrad auch von der Funktionalität der Polyisocyanates abhängen. So wird man bei Anwesenheit von tri- oder höherfunktionellen hydroxyl- oder sulfhydryl-terminierten Aufbaukomponenten in der Regel Diisocyanate einsetzen, während man bei der Verwendung von difunktionellen hydroxyl- oder sulfhydryl-terminierten Aufbaukomponenten auch höherfunktionelle Isocyanate verwendet. Beispiele für präpolymere Aufbaukomponenten zur Herstellung von Polyisocyanaten a1) sind hydroxyl-terminierte Polyether, insbesondere solche Polyether, die zu wasserunlöslichen Verbindungen der Formel I führen.

Dazu zählen beispielsweise die Polyalkylenetherpolyole, die durch anionische Polymerisation, Copolymerisation oder Blockcopolymerisation von Alkylenoxiden, wie Ethylenoxid, Propylenoxid oder Butylenoxid, mit di- oder polyfunktionellen Alkoholen, wie 1,4-Butandiol, 1,1,1-Trimethylolethan, 1,1,1-Trimethylolpropan, 1,2,6-Hexantriol, Glycerin, Pentaerithrit oder Sorbit, oder mit Aminen, wie Methylamin, Ethylendiamin oder 1,6-Hexylendiamin, als Starterkomponenten oder durch kationische Polymerisation oder Copolymerisation cyclischer Ether, wie Tetrahydrofuran, Ethylenoxid oder Propylenoxid mit sauren Katalysatoren, wie $BF_3 \cdot$ Etherat oder durch Polykondensation von unter Wasserabspaltung polykondensierbaren Glykolen, wie 1,6-Hexandiol, in Gegenwart saurer Veretherungskatalysatoren, wie p-Toluolsulfonsäure, erhalten werden. Ferner kann man auch Oxalkylierungsprodukte von Phosphorsäure oder phosphoriger Säure mit Ethylenoxid, Propylenoxid, Butylenoxid oder Styroloxid verwenden.

Weitere bevorzugte hydroxyl-terminierte Polyether enthalten aufgepfropfte 1-Olefine, wie Acrylnitril, Styrol oder Acrylsäureester. Dabei beträgt der Gewichtsanteil der Pfropfkomponente in der Regel 10-50%, insbesondere 10-30%, bezogen auf die Menge des eingesetzten Polyethers.

Weitere Beispiele für präpolymere Aufbaukomponenten zur Herstellung von Polyisocyanaten a1) sind hydroxyl-terminierte Polyesterpolyole, die sich von Di- und/oder Polycarbonsäuren und Di- und/oder Polyolen, bevorzugt von Dicarbonsäuren und Diolen ableiten.

Beispiele für solche Polykondensate sind die hydroxyl-terminierten Polyester, die sich durch Polykondensation von Adipinsäure, Sebazinsäure, Azelainsäure, Dimer- und Trimerfettsäuren, Phthalsäure, Isophthalsäure Terephthalsäure, Tetrahydrophthalsäure, Hexahydrophthalsäure und Endomethylentetrahydrophthalsäure mit Propylenglykol, 1,4-Butandiol, 1,6-Hexandiol, Di-, Tri- und Tetraethylenglykol, Di-, Tri- und Tetrapropylenglykol, Di-, Tri- und Tetrabutylenglykol, 2,2-Dimethylpropan-1,3-diol, 1,1,1-Trimethylolpropan, 1,1,1-Trimethylolethan und 1,2,6-Hexantriol erhalten lassen.

Weitere geeignete präpolymere Aufbaukomponenten zur Herstellung von Polyisocyanaten a1) sind hydroxyl-terminierte Polybutadiene, die insbesondere zusammen mit hydroxyl-terminierten Polyethern zur Bildung der Komponente a1) umgesetzt werden.

Weitere Beispiele für geeignete präpolymere Aufbaukomponenten zur Herstellung von Polyisocyanaten a1) sind Polymerisationsprodukte von Lactonen, beispielsweise von ε-Caprolactonen ; oder Polyalkylenthioetherpolyole, beispielsweise die Polykondensationsprodukte des Thiodiglykols mit sich und mit Diolen und/oder Polyolen, wie beispielsweise 1,6-Hexandiol, Triethylenglykol, 2,2-Dimethyl-1,3-propandiol oder 1,1,1-Trimethylolpropan.

Bevorzugte präpolymere Aufbaukomponenten zur Herstellung von Polyisocyanaten a1) sind hydroxyl-terminierte Polyether oder Polyester.

Weitere bevorzugte präpolymere Aufbaukomponenten zur Herstellung von Polyisocyanaten a1) sind Gemische von hydroxyl-terminiertem Polybutadien und hydroxyl-terminiertem Polyalkylenglykol oder hydroxyl-terminierte Polyalkylenglykole enthaltend aufgepfropfte 1-Olefine, insbesondere Styrol oder Acrylsäurederivate, wie Acrylsäureester oder Acrylnitril.

Ganz besonders bevorzugte präpolymere Aufbaukomponenten zur Herstellung von Polyisocyanaten a1) sind hydroxylterminierte Polyether, insbesondere dihydroxyl-terminierte Polyalkylenglykole.

Kettenverlängerer zur Herstellung des präpolymeren Polyisocyanats a1) sind an sich bekannt. Beispiele

dafür sind die weiter oben zur Herstellung der hydroxyl-terminierten Polyether erwähnten Diole und Polyole, insbesondere die Diole und Triole, wie 1,4-Butandiol, 1,1,1-Trimethylolpropan oder Hydrochinon-(2-hydroxyethylether), oder auch Diamine, wie Diaminoethan, 1,6-Diaminohexan, Piperazin, 2,5-Dimethylpiperazin, 1-Amino-3-aminomethyl-3,5,5-trimethylcyclohexan, 4,4'-Diaminocyclohexylmethan, 1,4-Diaminocyclohexan und 1,2-Propylendiamin oder auch Hydrazin, Aminosäurehydrazide, Hydrazide von Semicarbazidocarbonsäuren, Bis-hydrazide und Bis-semicarbazide.

Vorzugsweise verwendet man kurzkettige Diole oder Triole als Kettenverlängerungsmittel.

Das präpolymere Polyisocyanat a2) lässt sich in an sich bekannter Weise aus amino-terminierten Präpolymeren der Formel IIIb, insbesondere aus amino-terminierten Polyethern durch Umsetzung mit Phosgen oder mit Polyisocyanaten, bevorzugt mit Di- oder Triisocyanaten, besonders bevorzugt mit Diisocyanaten erhalten. Die amino-terminierten Präpolymeren enthalten neben den Aminogruppen im allgemeinen keine weiteren Reste mit aktiven Wasserstoffatomen. Präpolymere mit terminalen Aminogruppen leiten sich im allgemeinen von den weiter oben als Aufbaukomponente für a1) beschriebenen hydroxyl-terminierten Kondensations- oder Additionspolymeren, insbesondere von Polyethern ab.

Sie lassen sich erhalten, indem man besagte Kondensations- oder Additionspolymere enthaltend sekundäre Hydroxylgruppen mit Ammoniak umsetzt oder indem man besagte Kondensations- oder Additionspolymere enthaltend primäre Hydroxylgruppen, beispielsweise Polybutylenglykol, mit Acrylnitril umsetzt, und diese Produkte anschliessend hydriert.

Präpolymeres, amino-terminiertes Poly-THF lässt lassen sich auch gemäss S. Smith et al. in Macromol. Sci. Chem., A7(7), 1399-1413 (1973) durch Abbrechen eines difunktionellen lebenden kationischen THF-Polymers mit Kaliumcyanat erhalten.

Als Polyisocyanat zur Herstellung der Komponenten a1) bzw. a2) verwendet man in der Regel aliphatische, cycloaliphatische, aromatische oder araliphatische Di-, Tri- oder Tetraisocyanate oder in solche Isocyanate überführbare Vorläufer.

Bevorzugt werden die aliphatischen, cycloaliphatischen oder araliphatischen Di- oder Triisocyanate, ganz besonders die aliphatischen oder cycloaliphatischen Diisocyanate.

Bei den bevorzugten aliphatischen Diisocyanaten handelt es sich in der Regel um geradkettige oder verzweigte α,ω-Diisocyanate. Die Alkylenketten können gegebenenfalls durch Sauerstoff- oder Schwefelatome unterbrochen sein und können gegebenenfalls ethylenisch ungesättigte Bindungen enthalten.

Bevorzugt werden α,ω-Diisocyanate mit geradkettigen, gesättigten $C_2$-$C_{20}$ Alkylenresten.

Beispiele für solche Reste sind Ethylen, Tri-, Tetra-, Penta-, Hexa-, Hepta-, Octa-, Deca-, Dodeca-, Tetradeca-, Hexadeca-, Octadeca- und Eicosamethylen.

Beispiele für bevorzugte, durch Heteroatome unterbrochene aliphatische α,ω-Diisocyanatreste sind $-(CH_2-CH_2-O)_o-CH_2-CH_2-$, $-(CH(CH_3)-CH_2-O)_o-CH(CH_3)-CH_2-$, $-(CH_2-CH_2-CH_2-CH_2-O)_o-CH_2-CH_2-CH_2-CH_2-$ und $-(CH_2-CH_2-S)_o-CH_2-CH_2-$, worin o 1 bis 20 beträgt.

Bei den bevorzugten cycloaliphatischen Diisocyanaten handelt es sich in der Regel um Derivate, die sich von gegebenenfalls substituierten Cyclopentanen, Cyclohexanen oder Cycloheptanen ableiten. Es können auch zwei solcher Ringe über ein Brückenglied miteinander verbunden sein.

Beispiele für solche Reste sind 1,3- und 1,4-Cyclohexylen oder Dodecahydrodiphenylmethan-4,4'-diyl.

Ferner kann man Di- oder Triisocyanate verwenden, die sich von Dimer- oder Trimerfettsäuren ableiten. Diese Verbindungen lassen sich in an sich bekannter Weise aus den Fettsäuren durch Umlagerung in die Entsprechenden Di- oder Triisocyanate erhalten (Hoffmann-, Curtius- oder Lossen-Umlagerungen).

Beispiele für bevorzugte aromatische Diisocyanate entsprechen den weiter oben für zweiwertige Phenolreste gegebenen Beispielen, bei denen die —OH-Gruppen durch —NCO-Gruppen ausgetauscht sind.

Beispiele für araliphatische Diisocyanatreste sind 1,2- und 1,4-Xylylen.

Spezifische Beispiele für geeignete Polyisocyanate sind 2,4-Diisocyanatotoluol sowie dessen technische Gemische mit 2,6-Diisocyanatotoluol, 2,6-Diisocyanatotoluol, 1,5-Diisocyanatonaphthalin, 4,4'-Diisocyanatodiphenylmethan sowie technische Gemische verschiedener Diisocyanatodiphenylmethane (beispielsweise der 4,4'-und 2,4'-Isomeren), urethanisiertes 4,4'-Diisocyanatodiphenylmethan, carbodiimidisiertes 4,4'-Diisocyanatodiphenylmethan, das Uretdion des 2,4-Diisocyanatotoluols, Triisocyanatotriphenylmethan, das Addukt aus Diisocyanatotoluol und Trimethylolpropan, das Trimerisat aus Diisocyanatotoluol, Diisocyanato-m-xylylen, N,N'-Di-(4-methyl-3-isocyanatophenyl)-harnstoff, Mischtrimerisationsprodukte von Diisocyanatotoluol und 1,6-Diisocyanatohexamethylen, 1,6-Diisocyanatohexan, 3,5,5-Trimethyl-1-isocyanato-3-isocyanatomethylcyclohexan (Isophorondiisocyanat), N,N',N'''-Tri-(6-isocyanatohexyl)-biuret, 2,2,4-Trimethyl-1,6-diisocyanatohexan, 1-Methyl-2,4-diisocyantocyclohexan, Dimeryldiisocyanat, 4,4'-Diisocyantodicyclohexylmethan, trimeres Isophorondiisocyanat, trimeres Hexandiisocyanat und 2,6-Diisocyanatohexansäuremethylester.

Die Herstellung der Komponente a1) bzw. a2) erfolgt in an sich bekannter Weise durch Umsetzung der hydroxyl-, sulfhydryl- oder amino-terminierten elastomeren Präpolymerkomponente mit einem Polyisocyanat oder einem Gemisch dieser Komponenten. Die Umsetzungen können gegebenenfalls in Gegenwart eines Kettenverlängerers, vorgenommen werden.

Die Herstellung der Komponente a1) bzw. a2) erfolgt in Substanz oder in gegenüber Isocyanaten inerten Lösungsmitteln.

Beispiele für inerte Lösungsmittel sind Ester, wie Ethylacetat, Butylacetat, Methylglycolacetat und Ethylglykolacetat ; Ketone, wie Methylethylketon oder Methylisobutylketon ; Aromaten, wie Toluol oder Xylol oder halogenierte Kohlenwasserstoffe, wie Trichlorethan oder Dichlormethan.

Nimmt man eine bestimmte zusätzliche Kettenverlängerungsreaktion über Urethan- oder Harnstoffgruppen in Kauf oder ist diese sogar erwünscht, so setzt man die hydroxyl-, sulfhydryl- oder aminogruppenhaltigen Präpolymeren und die gegebenenfalls anwesenden Monomeren gegebenenfalls zunächst bei 0-25°C und unter Kühlung und später gegebenenfalls über mehrere Stunden unter Erwärmung auf vorzugsweise 50-120°C in einem NCO/OH— bzw. NCO/SH— bzw. $NCO/NH_2$-Verhältnis von 1,5-2,5, bevorzugt 1,8-2,2, mit den Di- oder Polyisocyanat um.

Ist eine Kettenverlängerungsreaktion nicht erwünscht, so verwendet man in der Regel einen wesentlich grösseren Ueberschuss an Di-oder Polyisocyanat, beispielsweise ein NCO/OH—, NCO/SH— oder $NCO/NH_2$-Verhältnis von 3-5, und keinen Kettenverlängerer, und verfährt ansonsten wie bei niedrigen NCO/OH—, NCO/SH— oder $NCO/NH_2$-Verhältnissen beschrieben. Nach der Reaktion wird gegebenenfalls das überschüssige Di- oder Polyisocyanat entfernt, beispielsweise durch Dünnschichtdestillation oder durch Lösungsmittelextration.

Die Umsetzung der hydroxyl-, sulfhydryl- oder amino-terminierten Präpolymeren mit Polyisocyanaten wird in Gegenwart an sich bekannter Katalysatoren durchgeführt.

Beispiele dafür sind Diazabicyclooctan, Dibutylzinndilaurat oder Zinn-II-octoat. Diese Katalysatoren werden in den üblichen Mengen eingesetzt, beispielsweise in Mengen von 0,001-2 Gew.-%, bezogen auf die Menge an Polyisocyanat.

Die Reaktion der Komponenten a1) oder a2) (Polyisocyanat IIIa) mit dem Phenol oder Aminophenol IVa erfolgt in Analogie zur oben beschriebenen Umsetzung der hydroxyl-, sulfhydryl- oder amino-terminierten Aufbaukomponente mit dem Polyisocyanat.

Das Polyphenol oder Aminophenol IVa wird dabei bevorzugt in einer solchen Menge vorgelegt, dass die freien NCO-Gruppen im wesentlichen durch die Reaktion verbraucht werden, und dass pro Polyphenol oder Aminophenol vorwiegend eine —OH bzw. —$NH_2$ Gruppe reagiert.

Dies wird in der Regel dann der Fall sein, wenn auf 1 Mol freie Isocyanatgruppen etwa zwei bzw. drei Mol OH-Gruppen des Bis- oder Trisphenols oder etwa ein Mol $NH_2$-Gruppen des Aminophenols vorgelegt werden.

Im Falle der Polyphenole IVa beträgt das Verhältnis von OH : NCO im allgemeinen 1,5 : 1,0 bis 3,0 : 1,0, vorzugsweise 1,8 : 1,0 bis 2,5 : 1,0.

Im Falle der Aminophenole IVa beträgt das Verhältnis von $NH_2$ : NCO im allgemeinen 0,8 : 1,0 bis 1,2 : 1,0, bevorzugt 0,8 : 1,0 bis 1,0 : 1,0.

Natürlich können auch Ueberschussmengen der Komponente IVa eingesetzt werden, wobei Kettenverlängerung über das Phenol eintreten kann ; doch sollte das Endprodukt nicht mehr als 50 Gew.-%, bevorzugt weniger als 10 Gew.% bezogen auf die Gesamtmischung an unreagierter Komponente IVa aufweisen.

Im Fall der Aminophenole IVa ist im allgemeinen eine stöchiometrische Menge erwünscht.

Zur Verkappung des Polyisocyanats IIIa können auch Gemische aus Phenol und/oder Aminophenol IVa eingesetzt werden. Diese Gemische können ferner geringe Anteile an Monophenolen enthalten. Bei dieser Variante wird der Monophenolanteil so gewählt, dass das Reaktionsprodukt hauptsächlich aus Verbindungen der Formel I mit freien phenolischen OH-Gruppen besteht.

Bei den amino-terminierten Präpolymeren IIIb in Verfahren b) oder c) handelt es sich in der Regel um die präpolymeren Polyamine, die bereits in Verfahren a) beschrieben wurden, und die dort zur Herstellung der präpolymeren Polyisocyanatkomponenten IIIa eingesetzt wurden. Bevorzugte Verbindungen IIIb sind amino-terminierte Polyether, wie oben definiert.

Die Urethane IVb leiten sich von Aminophenolen $HR^3N\text{-}R^2\text{-}(OH)_m$ ab, worin $R^2$, $R^3$ und m die oben definierte Bedeutung besitzen. Zur Herstellung von Urethanen IVb verkappt man diese Aminophenole in an sich bekannter Weise mit $R^{11}$-O-CO-Cl. Dabei besitzt $R^{11}$ die weiter oben definierte Bedeutung. Die Umsetzung der Komponenten IIIb und IVb (Verfahren b) erfolgt im allgemeinen durch Vorgabe eines stöchiometrischen

Verhältnisses beider Komponenten oder eines geringen Ueberschusses an Komponente IVb und durch Erhitzen des Gemisches, so dass praktisch alle freien Aminogruppen von IIIb verkappt werden.

Die Reaktion wird bevorzugt in einem inerten Lösungsmittel ausgeführt. Beispiele dafür sind weiter oben aufgelistet.

Die cyclischen Carbonate oder Urethane IVc leiten sich von ortho- oder peri-Bisphenolen bzw. Aminophenolen der Formel HO-$R^{12}$-OH bzw. H$R^3$-N-$R^{12}$-OH ab. Dabei besitzen $R^3$ und $R^{12}$ die weiter oben definierte Bedeutung. Die Verbindungen IVc lassen sich daraus durch Umsetzung mit Phosgen erhalten. Die Umsetzung der Komponenten IIIb und IVc (Verfahren c) erfolgt in allgemeinen durch Vorgabe eines stöchiometrischen Verhältnisses beider Komponenten oder eines geringen Ueberschusses an Komponente IVc. Ansonsten wird die Reaktion wie bei Verfahren a) beschrieben durchgeführt.

Das Molekulargewicht (Zahlenmittel) der Polyurethane oder Polyharnstoffe B) liegt üblicherweise im Bereich von 500-50'000, vorzugsweise im Bereich von 500-10'000, ganz besonders bevorzugt im Bereich von 500-3000.

Die Viskosität dieser Verbindungen beträgt in der Regel weniger als 150000 mPas, vorzugsweise weniger als 100000 mPas (gemessen bei 80°C mit dem Epprecht Viskosimeter).

Die Strukturen der phenol-terminierten Polyurethane oder Polyharnstoffe der Formel I, welche sich von der Umsetzung gemäss Verfahren a), b) oder c) ableiten, werden sich, je nach der Funktionalität des Präpolymerrestes $R^1$, unterscheiden.

In Verfahren a) wird diese Funktionalität beispielsweise durch die Funktionalität der hydroxyl-, sulfhydryl- oder amino-terminierten Präpolymeren, durch gegebenenfalls eingesetzte Kettenverlängerer, die Funktionalität des zur Herstellung von IIIa verwendeten Isocyanats und die Mengenverhältnisse der einzelnen Reaktanden bestimmt. Bevorzugte Komponenten B) sind Verbindungen der Formel I, worin X —NH— ist und Y —NH—, ganz besonders bevorzugt jedoch —O—, bedeutet.

Ebenfalls bevorzugte Komponenten B) sind Verbindungen der Formel I, die im wesentlichen frei von Isocyanatgruppen sind und wenigstens zwei freie phenolische Hydroxylgruppen aufweisen und die erhältlich sind durch Umsetzung von

a) einem präpolymeren Polyisocyanat, welches

a1) ein Addukt eines Polyisocyanats an eine präpolymere Polyhydroxyl- oder Polysulfhydrylverbindung oder an ein Gemisch solcher Verbindungen gegebenenfalls in Kombination mit einem Kettenverlängerer ist, oder

a2) sich ableitet von einem präpolymeren Polyetheramin, mit

b) mindestens einem Phenol mit zwei oder drei phenolischen Hydroxylgruppen oder mit einem Aminophenol mit eine oder zwei phenolischen Hydroxylgruppen.

Besonders bevorzugte Verbindungen der Formel I leiten sich von präpolymeren Polyisocyanaten a) ab, die eine mittlere Isocyanatfunktionalität von 2 bis 3 besitzen.

Besonders bevorzugt werden Verbindungen der Formel I, worin Komponente a1) ein Addukt eines Polyisocyanats an ein hydroxyl-terminiertes Präpolymeres mit einem mittleren Molekulargewicht von 150 bis 10000 ist. Ganz besonders bevorzugt werden Verbindungen der Formel I, worin die Aufbaukomponente zur Herstellung von Komponente a1) ein hydroxyl-terminierten Polyether oder Polyester ist.

Diese Aufbaukomponente zur Herstellung von Komponente a1) wird vorzugsweise in Kombination mit Kettenverlängern eingesetzt.

Ganz besonders bevorzugt werden Verbindungen der Formel I, worin das Polyisocyanat zur Herstellung von Komponente a1) ein aliphatisches, cycloaliphatisches, aromatisches oder araliphatisches Di- oder Triisocyanat ist.

In einer bevorzugten Ausführungsform arbeitet man bei der Herstellung der Komponente a1) mit einem hydroxyl-terminierten Polyether oder Polyester in Abwesenheit eines Kettenverlängerers und mit einer dem OH-Gehalt äquivalenten oder überschüssigen Menge an Polyisocyanat und erhält nach dem Verkappen mit dem Polyphenol bzw. Aminophenol Polyurethane der Formel VII

$$\{\{(HO-)_m R^2-X-\overset{\displaystyle O}{\overset{\|}{C}}-NH-\}_r R^{13}-NH-\overset{\displaystyle O}{\overset{\|}{C}}-O-\}_n R^{14} \qquad (VII),$$

worin $R^2$, m und n die oben definierte Bedeutung besitzen, r eine ganze Zahl zwischen 1 und 3 ist, X —O— oder —NH— bedeutet, $R^{13}$ der r + 1-wertige Rest eines aliphatischen, cycloaliphatischen, aromatischen oder araliphatischen Polyisocyanates nach dem Entfernen der Isocyanatgruppen ist, $R^{14}$ ein n-wertiger hydroxyl-terminierter Polyester- oder Polyetherrest nach dem Entfernen der endständigen OH-Gruppen ist, mit der Massgabe, dass der Index m und die Reste $R^2$ und $R^{13}$ innerhalb eines gegebenen Moleküls unterschiedlich

sein können.

Bevorzugt werden Zusammensetzungen enthaltend als Komponente B) Verbindungen der Formel VII.

Der Index m ist vorzugsweise 1. Der Index n ist vorzugsweise 2 oder 3, ganz besonders bevorzugt 2. Der Index r ist vorzugsweise 1. Bevorzugte Komponenten B) sind Verbindungen der Formel VII, worin m 1 ist, n 2 oder 3 bedeutet, r 1 ist, X —O— ist, $R^{13}$ sich ableitet von einem aliphatischen, cycloaliphatischen oder aromatischen Diisocyanat und $R^{14}$ ein zwei- oder dreiwertiger Rest eines hydroxyl-terminierten Polyesters oder Polyethers mit einem Molekulargewicht von 150 bis 10000 nach dem Entfernen der endständigen Hydroxylgruppen ist.

Ganz besonders bevorzugte Komponenten B) sind Verbindungen der Formel VII, worin m 1 ist, n 2 oder 3 bedeutet, r 1 ist, X —O— ist, $R^{13}$ sich ableitet von einem aliphatischen oder cycloaliphatischen Diisocyanat und $R^{14}$ ein zwei- oder dreiwertiger Rest eines Polyalkylenetherpolyols mit einem Molekulargewicht von 150 bis 3000 nach dem Entfernen der endständigen Hydroxylgruppen ist.

Zu den besonders bevorzugten Komponenten B) dieses zuletzt definierten Typs zählen diejenigen, worin n 2 bedeutet und $R^{14}$ ein Strukturelement der Formel VIII ist

$$-(C_sH_{2s}\text{-}O\text{-})_x\text{-}C_sH_{2s}- \quad \text{(VIII)}$$

worin s 3 oder 4 bedeutet, x eine ganze Zahl von 5 bis 40 ist und die Einheiten $-C_sH_{2s}\text{-}O-$ innerhalb eines gegebenen Strukturelementes der Formel VIII im Rahmen der gegebenen Definitionen unterschiedlich sein können.

Beispeile für Strukturelemente der Formel VIII sind $-(CH_2\text{-}CH(CH_3)\text{-}O)_x\text{-}CH_2CH(CH_3)-$, $-(CH_2\text{-}CH_2\text{-}CH_2\text{-}CH_2\text{-}O)_x\text{-}CH_2CH_2CH_2\text{-}CH_2$ sowie Copolymere enthaltend diese Strukturlemente.

Zu den ebenfalls bevorzugten Komponenten B) dieser Erfindung zählen Verbindungen, die erhältlich sind durch Umsetzung von

a1) einem Addukt einer im wesentlichen äquivalenten Menge eines Diisocyanates mit einem Gemisch aus einem di- oder tri-hydroxyl-terminierten Polyether oder Polyester und weniger als 1 Mol-%, bezogen auf das hydroxyl-terminierte Präpolymere, eines kurzkettigen Diols oder Triols und

b) einer dem NCO-Gehalt im wesentlichen äquivalenten Menge eines Bisphenols oder Trisphenols.

In einer weiteren bevorzugten Ausführungsform arbeitet man bei der Herstellung der Komponente a2) mit einem amino-terminierten Polyalkylenether, setzt diesen in Abwesenheit eines Kettenverlängerers mit einer dem $NH_2$-Gehalt äquivalenten oder überschüssigen Menge an Diisocyanat oder mit Phosgen um und verkappt das erhaltene Polyisocyanat mit einem Polyphenol oder Aminophenol IIIa. Man erhält eine Verbindung der Formel IX

$$\left[(HO-)_m R^3\text{-}Y\text{-}\left(\overset{O}{\overset{\|}{C}}\text{-}NH\text{-}R^{15}-\right)_t \overset{O}{\overset{\|}{C}}\text{-}NH-\right]_n R^{16} \qquad \text{(IX)},$$

worin $R^3$, Y, m und n die oben definierte Bedeutung besitzen, Y insbesondere —O— oder —NH— ist, t 0 oder 1 ist, $R^{15}$ der zweiwertige Rest eines aliphatischen, cycloaliphatischen, aromatischen oder araliphatischen Diisocyanats nach dem Entfernen der Isocyanatgruppen ist und $R^{16}$ der n-wertige Rest eines amino-terminierten Polyalkylenethers nach dem Entfernen der endständigen $NH_2$-Gruppen ist.

Zusammensetzungen enthaltend Verbindungen der Formel IX als Komponente B) werden bevorzugt.

Besonders bevorzugte Zusammensetzungen enthalten Verbindungen der Formel IX als Komponente B), worin m 1 ist, n 2 oder 3 bedeutet, Y —O— ist, $R^{15}$ sich ableitet von einem aliphatischen, cycloaliphatischen oder aromatischen Diisocyanat und $R^{16}$ ein zwei- oder dreiwertiger Rest eines amino-terminierten Polyalkylenethers mit einem Molekulargewicht von 150 bis 10000 nach dem Entfernen der endständigen Aminogruppen ist.

Ganz besonders bevorzugte Zusammensetzungen enthalten Verbindungen der Formel IX als Komponente B), worin m 1 ist, n 2 bedeutet, t 0 ist, Y —O— bedeutet und $R^{16}$ sich ableitet von einem zweiwertigen amino-terminierten Polyalkylenether mit einem Molekulargewicht von 150 bis 6000.

Ganz besonders bevorzugte Zusammensetzungen enthalten Verbindungen der Formel IX als Komponente B), worin m und t 1 sind, n 2 bedeutet, $R^{15}$ der zweiwertige Rest eines aliphatischen oder cycloaliphatischen Diisocyanats nach dem Entfernen der Isocyanatgruppen ist und $R^{16}$ sich ableitet von einem zweiwertigen amino-terminierten Polyalkylenether mit einem Molekulargewicht von 150 bis 6000.

Zu den besonders bevorzugten Komponenten B) dieser beiden zuletzt definierten Typen zählen diejenigen, worin $R^{16}$ ein Strukturelement der Formeln X, XI, XII, XIII oder XIV ist

$$-\underset{CH_3}{CH}-CH_2-(-O-CH_2-\underset{CH_3}{CH}-)_y- \quad (X), \quad R^{17}-[-O-(CH_2-\underset{CH_3}{CH})_y-CH_2-\underset{CH_3}{CH}-]_2 \quad (XI),$$

$$R^{18}[-O-(CH_2-\underset{CH_3}{CH}-O)_y-CH_2-\underset{CH_3}{CH}-]_3 \quad (XII), \quad -(CH_2)_4-[-O-(CH_2)_4-]_z \quad (XIII),$$

$$CO[-NH-(\underset{CH_3}{CH}-CH_2-O)_y-R^{17}-(O-CH_2-\underset{CH_3}{CH}-)_y-]_2 \quad (XIV),$$

worin y 5 bis 90, insbesondere 10 bis 70 ist, z 10 bis 40 ist, $R^{17}$ ein Rest eines aliphatischen Diols nach dem Entfernen der beiden OH-Gruppen ist und $R^{18}$ ein Rest eines aliphatischen Triols nach dem Entfernen der drei OH-Gruppen ist.

Die erfindungsgemässen Zusammensetzungen aus A) und B) lassen sich mit Epoxidharzen zu gehärteten Produkten mit den weiter oben geschilderten vorteilhaften Eigenschaften verarbeiten.

Die Erfindung betrifft daher auch Zusammensetzungen enthaltend Komponenten A) und B), wie oben definiert, und C) ein Epoxidharz mit wenigstens zwei 1,2-Epoxidgruppen pro Molekül ; oder enthaltend ein Addukt aus Komponente A) und einem Epoxidharz, sowie Komponente B) und gegebenenfalls Komponente C) ; oder enthaltend Komponente A), ein Addukt aus Komponente B) und einem Epoxidharz sowie gegebenenfalls Komponente C) ; oder enthaltend ein Addukt aus Komponente A) und einem Epoxidharz, ein Addukt aus Komponente B) und einem Epoxidharz, sowie gegebenenfalls Komponente C).

Die Herstellung der erfindungsgemässen Zusammensetzungen kann in üblicher Weise durch Vermischen der Komponenten mit Hilfe bekannter Mischaggregate (Rührer, Walzen) erfolgen.

Als Komponente C) oder zur Herstellung der Addukte kann im Prinzip jede in der Technik der Epoxidharze übliche Verbindung eingesetzt werden.

Beispiele für Epoxidharze sind :

I) Polyglycidyl- und Poly-(β-methylglycidyl)-ester erhältlich durch Umsetzung einer Verbindung mit mindestens zwei Caraboxylgruppen im Molekül und Epichlorhydrin bzw. β-Methyl-epichlorhydrin. Die Umsetzung erfolgt zweckmässig in der Gegenwart von Basen.

Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isphthalsäure oder Terephthalsäure.

II) Polyglycidyl- oder Poly-(β-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhyddrin unter alkalischen Bedingungen, oder in Anwesenheit eines sauren Katalysators und anschliessender Alkalibehandlung.

Ether dieses Typs leiten sich beispielsweise ab von acyclischen Alkoholen, wie Ethylenglykol, Diethylenglycol und höheren Poly-(oxyethylen)-glycolen, Propan-1,2-diol oder Poly-(oxypropylen)-glycolen, Propan-1,3-diol, Butan-1,4-diol, Poly-(oxytetramethylen)-glycolen, Pentan-1,5-diol, Hexan-1,6-diol, Hexane-2,4,6-triol, Glyzerin, 1,1,1-Trimethylolpropan, Pentaerythrit, Sorbit, sowie von Polyepichlorhydrinen.

Sie leiten sich aber auch beispielsweise ab von cycloaliphatischen Alkoholen wie 1,4-Cyclohexandimethanol, Bis-(4-hydroxycyclohexyl)-methan oder 2,2-bis(4-hydroxycyclohexyl)-propan oder sie besitzen aromatische Kerne wie N,N-Bis-(2-hydroxyethyl)-anilin oder p,p′-Bis-(2-hydroxyethylamino)-diphenylmethan.

Die Epoxidverbindungen können sich auch von einkernigen Phenolen ableiten wie beispielsweise von Resorcin oder Hydrochinon ; oder sie basieren auf mehrkernigen Phenolen wie beispielsweise Bis-(4-hydroxyphenyl)-methan, 4,4′-Dihydroxydiphenyl, Bis-(4-hydroxyphenyl)-sulphon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie von Novolaken erhältlich durch Kondensation von Aldehyden wie Formaldehyd, Acetaldehyd, Chloral oder Furfuraldehyd mit Phenolen wie Phenol, oder mit Phenolen, die im Kern mit Chloratomen oder $C_1$-$C_9$Alkylgruppen substituiert sind, wie beispielsweise 4-Chlorphenol, 2-Methylphenol oder 4-tert.Butylphenol oder durch Kondensation mit Bisphenolen, so wie oben beschrieben.

III) Poly-(N-glycidyl) Verbindungen erhältlich durch Dehydrochlorierung der Reaktionsprodukte von Epichlorhydrin mit Aminen, die mindestens zwei Aminowasserstoffatome enthalten. Bei diesen Aminen handelt es sich zum Beispiel um Anilin, n-Butylamin, Bis-(4-aminophenyl)-methan, m-Xylylendiamin oder Bis-(4-methylaminophenyl)-methan.

Zu den Poly-(N-glycidyl) Verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

IV) Poly-(S-glycidyl) Verbindungen, beispielsweise Di-S-glycidylderivate, die sich von Dithiolen, wie beispielsweise Ethan-1,2-dithiol oder Bis-(4-merkaptomethylphenyl)-ether ableiten.

V) Cycloaliphatische Epoxidharze, beispielsweise Bis-(2,3-epoxicyclopentyl)-ether, 2,3-Epoxicyclopentylglycidylether, 1,2-Bis-(2,3-epoxycyclopentyloxy)-ethan oder 3,4-Epoxicyclohexylmethyl-3',4'-epoxicyclohexancarboxylat.

Es lassen sich aber auch Epoxidharze verwenden, bei denen die 1,2-Epoxidgruppen an unterschiedliche Heteroatome bzw. funktionelle Gruppen gebunden sind ; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)-propan.

Besonders bevorzugt als Epoxidharze werden Polyglycidylether von Bisphenolen, wie beispielsweise von 2,2-Bis-(4-hydroxyphenyl)-propan oder Bis-(4-hydroxyphenyl)-methan, von Novolaken, die durch Umsetzung von Formaldehyd mit einem Phenol gebildet werden, oder von den oben erwähnten aliphatischen Diolen, insbesondere von Butan-1,4-diol, sowie Addukte von Bisphenol A und glycidylisierten aliphatischen Diolen.

Die erfindungsgemässen härtbaren Zusammensetzungen enthalten in der Regel noch zusätzliche dem Fachmann bekannte Härter D), gegebenenfalls in Kombination mit einem Beschleuniger E).

Beispiele für Härter D) sind aliphatische, cycloaliphatische, aromatische und heterocyclische Amine, wie Bis-(4-aminophenyl)-methan, Anilin-Formaldehyd-Harze, Bis-(4-aminophenyl)-sulfon, Propan-1,3-diamin, Hexamethylendiamin, Diethylentriamin, Triethylentetramin, 2,2,4-Trimethylhexan-1,6-diamin, m-Xylylendiamin, Bis-(4-aminocyclohexyl)methan, 2,2-Bis-(4-aminocyclohexyl)-propan und 3-Aminomethyl-3,5,5-trimethylcyclohexylamin (Isophorondiamin) ; Polyaminoamide, wie beispielsweise solche aus aliphatischen Polyaminen und dimerisierten oder trimerisierten Fettsäuren ; Polyphenole, wie Resorcin, Hydrochinon, 2,2-Bis(4-hydroxyphenyl)propan (Bisphenol A) und Phenol-Aldehyd-Harze ; Polythiole, wie die im Handel unter der Bezeichnung "Thiokole®" erhältlichen Polythiole ; Polycarbonsäuren und ihre Anhydride, wie z.B. Phthalsäureanhydrid, Tetrahydrophthalsäureanhydrid, Hexahydrophthalsäureanhydrid, Hexachlorendomethylentetrahydrophthalsäureanhydrid, Pyromellitsäuredianhydrid, Benzophenon-3,3',4,4'-tetracarbonsäuredianhydrid, die Säuren der zuvorgenannten Anhydride sowie auch Isophthalsäure und Terephthalsäure. Es können auch katalytisch wirkende Härtungsmittel verwendet werden, wie beispielsweise tertiäre Amine [z.B. 2,4,6-Tris-(dimethylaminoethyl)phenol] ; Imidazole oder Mannichbasen ; Alkalimetallalkoholate (z.B. Na-Alkoholat von 2,4-Dihydroxy-3-hydroxymethylpentan) ; Zinnsalze von Alkansäuren (z.B. Zinnoctanoat) ; Friedel-Crafts-Katalysatoren, wie Bortrifluorid und Bortrichlorid und ihre Komplexe und Chelate, die durch Umsetzung von Bortrifluorid mit z.B. 1,3-Diketonen erhalten werden ; sowie Amidine, insbesondere Dicyandiamid.

Beispiele für Beschleuniger E) sind tertiäre Amine, deren Salze oder quaternäre Ammoniumverbindungen, wie Benzyldimethylamin, 2,4,6-Tris-(dimethylaminomethyl)phenol, 1-Methylimidazol, 2-Ethyl-4-methylimidazol, 4-Aminopyridin, Tripentylammoniumphenolat oder Tetramethylammoniumchlorid ; oder Alkalimetallalkoholate, wie Na-Alkoholate von 2,4-Dihydroxy-3-hydroxymethylpentan ; oder substituierte Harnstoffe, wie N-(4-Chlorphenyl)-N'N'-dimethylharnstoff oder N-(3-Chlor-4-methylphenyl)-N'N'-dimethylharnstoff (Chlortoluron).

Je nach Anteil der Komponenten A) und B) lassen sich die Eigenschaften des gehärteten Endproduktes variieren.

Die folgenden Prozentangaben beziehen sich jeweils auf das Gesamtgewicht der Komponenten A), B) und C).

Wünscht man Produkte mit hoher Festigkeit, hoher Glasübergangstemperatur, hoher Schälfestigkeit, hoher Schlagzähigkeit und hoher Rissfortpflanzungsbeständigkeit (Risszähigkeit), so sollte der Anteil der Komponenten A) und B) in der Regel 60 Gew.% nicht überschreiten. Solche Systeme sind in der Regel heterogen. Die untere Grenze richtet sich nach den gewünschten Eigenschaften, beispielsweise der Schälfestigkeit. In der Regel sollten Komponenten A) und B) mehr als 5 Gew.%, bevorzugt mehr als 10 Gew.%, ausmachen.

Wünscht man hingegen Produkte mit einer möglichst hohen Flexibilität, so sollten wenigstens 40 Gew.%, bevorzugt mehr als 60 Gew.%, an Komponenten A) und B) vorliegen.

Wenn Komponente A) und/oder B) durch Adduktbildung mit einem Epoxidharz modifiziert worden ist, so ist eine separate Komponente C) nicht unbedingt erforderlich.

Bei hochflexiblen Systemen modifiziert man Komponente A) bevorzugt durch Adduktbildung mit Epoxidharzen ; besonders bevorzugt werden Addukte von flüssigen Acrylnitril-Butadien-Copolymeren mit gegenüber Epoxidharzen reaktiven Gruppen an Glycidylether von aliphatischen Diolen, wie 1,4-Butandiol oder 1,6-Hexandiol.

Als Komponente C) eignen sich in diesem Fall besonders glycidylisierte Novolake, die sich von Phenolen mit langkettigen aliphatischen Kernsubstituenten ableiten, wie von Nonylphenol oder Cashewnut-Oel.

Das Gewichtsverhältnis von A) zu B) kann in weiten Grenzen variiert werden. Bevorzugter Bereich von A) zu B) ist 50 : 1 bis 1 : 50, besonders bevorzugt ist 20 : 1 bis 1 : 10, ganz besonders bevorzugt ist 5 : 1 bis 1 : 5.

Der Anteil des Epoxidharzes C) an der Gesamtmenge aus A), B) und C) kann ebenfalls in weiten Grenzen variiert werden. Für gehärtete Produkte mit einer erhöhten Flexibilität wird man im allgemeinen geringere Mengen von C), beispielsweise 10 bis 30 Gew.% einsetzen, wobei Komponente C) auch als Addukt an A) vorliegen kann, während für gehärtete Produkte mit einer hohen Festigkeit im allgemeinen grössere Mengen an C), beispielsweise 50 bis 95 Gew.%, bevorzugt 60-80 Gew.%, eingesetzt werden.

Ueberraschenderweise lässt sich eine Zusammensetzung enthaltend einen hohen Anteil an Komponenten A) und B), beispielsweise mehr als 50 Gew.%, bezogen auf die Mengen an A), B) und C), aushärten.

Die Erfindung betrifft daher auch ein Verfahren zum Härten von Zusammensetzungen enthaltend Komponenten A), B) und C), wie oben definiert, durch Zugabe eines bei Raumtemperatur oder bei erhöhter Temperatur aktiven Härters D) und gegebenenfalls eines Härtungsbeschleunigers E) für C) und gegebenenfalls Erhitzen, dadurch gekennzeichnet, dass der Anteil an A) und B) mehr als 50 Gew.%, bezogen auf das Gewicht von A), B) und C), ausmacht.

Die Menge an Härter D) bzw. an Beschleuniger E) ist abhängig vom Härtertyp und wird vom Fachmann in an sich bekannter Weise ausgewählt.

Bevorzugt werden heisshärtbare Systeme, worin Komponenten A), B) und C) in Kombination mit primären und/oder sekundären aromatischen Aminen oder mit Amidinen als Härter D) eingesetzt werden.

Bevorzugter Härter ist Dicyandiamid. In diesem Falle setzt man auf ein Mol Epoxidgruppen vorzugsweise 0,1-0,5 Mol des Härters ein.

Die Härtung der erfindungsgemässen Zusammensetzungen kann bei Raumtemperatur oder bei höheren Temperaturen vorgenommmen werden.

In allgemeinen liegen die Härtungstemperaturen bei der Heisshärtung zwischen 80 und 250°C, bevorzugt zwischen 100 und 180°C. Die Härtung kann gewünschtenfalls auch in zwei Stufen vorgenommen werden, indem man z.B. den Härtungsvorgang unterbricht oder, falls man ein Härtungsmittel für höhere Temperaturen einsetzt, die härtbare Mischung bei tieferen Temperaturen teilweise härten lässt. Die dabei erhaltenen Produkte sind noch schmelzbare und lösliche Präkondensate (sogenannte "B-Stufenharze") und eignen sich z.B. für Pressmassen, Sinterpulver oder Prepregs.

Gewünschtenfalls kann man den härtbaren Gemischen zur weiteren Herabsetzung der Viskosität reaktive Verdünner, wie z.B. Styroloxid, Butylglycidylether, 2,2,4-Trimethylpentylglycidylether, Phenylglycidylether, Kresylglycidylether oder Glycidylester von synthetischen, hochverzweigten, in der Hauptsache tertiären aliphatischen Monocarbonsäuren, zusetzen.

Als weitere übliche Zusätze können die erfindungsgemässen Gemische ferner Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Wollastonit, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Haftvermittler, Antioxidantien und Lichtschutzmittel enthalten.

Die gehärteten Produkte zeichnen sich durch die anfangs geschilderten vorteilhaften Eigenschaften aus.

Die Erfindung betrifft daher auch die Produkte erhältlich durch Härtung von Zusammensetzungen enthaltend A), B) und C) ; dabei können Komponenten A) und/oder B) auch als Addukte an Epoxidharze eingesetzt werden.

Die erfindungsgemässen Gemische lassen sich beispielsweise als Klebstoffe, Klebefilme, Patches, Matrixharze, Lacke oder Dichtungsmassen oder ganz allgemein zur Herstellung von gehärteten Produkten verwenden. Sie können in jeweils dem speziellen Anwendungsgebiet angepasster Formulierung, in ungefülltem oder gefülltem Zustand, z.B. als Anstrickmittel, Beschichtungsmassen, Lacke, Pressmassen, Tauchharze, Giessharze, Imprägnierharze, Laminerharze, Matrixharze und Klebemittel verwendet werden.

Die Erfindung betrifft auch die Verwendung der erfindungsgemässen Gemische für die oben erwähnten Zwecke.

Die folgenden Beispiele erläutern die Erfindung. Dabei bedeuten Mengenangaben Gewichtsteile, falls keine anderen Angaben vorliegen.

Beispiele 1-6 :

A. Herstellung der Komponenten

Phenolterminiertes Präpolymer 1A

Unter Stickstoff gibt man zu 54,4 g Hexamethylendiisocyanat bei 100°C 354 g trockenes Polypropylenglykol ($M_w$ = 2000), 1,8 g Trimethylolpropan und 0,1 ml Dibutylzinndilaurat. Nachdem man zwei Stunden bei 100°C gerührt hat und der Isocyanatgehalt unter 4% abgesunken ist, lässt man dieses Präpolymer bei 80°C in 135 g trockenes 3,3'-Diallylbisphenol A fliessen und rührt 2,5 Stunden bei 80°C und 30 Minuten bei 100°C bis kein freies Isocyanat mehr nachweisbar ist. Man erhält ein viskoses Harz mit den folgenden Analysendaten :
Viskosität $\eta_{40}$ = 128600 mPas ;
Phenolgehalt 2,5 Val/kg ;
Molekulargewicht (GPC) : $M_n$ = 1260, $M_w/M_n$ = 11,4.

Butadien/Acrylnitril Copolymer-Epoxidharzaddukt 1B

In einem Planschliffkolben mit Rührer, Stickstoffeinleitung und Rückflusskühler werden 730 g Bisphenol A-diglycidether (Epoxidgehalt 5,4 Val/kg), 200 g carboxylterminiertes Acrylnitril/Butadien Copolymer (26% Acrylnitrilgehalt, Säurezahl 32 mg KOH/g), 64 g Bisphenol A und 5 g Triphenylphosphin 3 Stunden bei 130°C erhitzt bis sich ein viskoses Harz mit einem Epoxidgehalt von 3,3 Val/kg mit einer Viskosität nach Epprecht von 130000 mPas (40°C) bildet.

B. Herstellung und Prüfung von Klebstofformulierungen

Allgemeine Arbeitsvorschrift :

Auf einem Dreiwalzenstuhl werden die in Tabelle I beschriebenen Mischungen hergestellt und zur Verklebung von entfettetem, sandgestrahltem, 1,5 mm-dickem Aluminium und von entfettetem 1,5 mm-dicken-Stahl eingesetzt, wobei die Prüfungskörper mit einer Ueberlappung von wird mittels dynamisch-mechanischer Spektroskopie an einem bei 1 h/180°C gehärteten Glasfaserprepreg, der mit dem Klebstoff imprägniert wurde, gemessen unter Verwendung eines Du Pont 9000 Thermoanalysegeräts.

Tabelle I: Getestete Klebstofformulierungen

| Beispiel Nr. | 1 | 2 | 3 | 4 | 5 | 6 |
|---|---|---|---|---|---|---|
| Diglycidylether auf Bisphenol-A Basis (Epoxidgehalt 5,4 Val/kg) | 70 | 70 | 70 | 70 | 70 | 70 |
| Butandioldiglycidether (Epoxidgehalt 9,2 Val/kg) | 5 | 5 | 5 | 5 | 5 | 5 |
| Glycidyloxypropyltrimethoxysilan | 0,1 | 0,1 | 0,1 | 0,1 | 0,1 | 0,1 |
| Wollastonit P1 | 30 | 30 | 30 | 30 | 30 | 30 |
| Dicyandiamid | 9,8 | 9,8 | 9,8 | 9,8 | 9,8 | 9,8 |
| Chlortoluron | 0,5 | 0,5 | 0,5 | 0,5 | 0,5 | 0,5 |
| Pyrogene Kieselsäure (Aerosil 380) | 0,1 | 0,1 | 0,1 | 0,1 | 0,1 | 0,1 |
| Addukt 1B | 30 | 30 | 30 | 30 | 30 | 30 |
| Phenolterminiertes Polyurethan 1A (Gew.% Polyurethan 1A) | 5 (3,3) | 15 (9,3) | 20 (12,0) | 30 (17,1) | 50 (25,6) | 70 (32,5) |
| Zugscherfestigkeit auf Al ($N/mm^2$) | 29,2 | 29,5 | 31,5 | 28,4 | 28,7 | 20,3 |
| Zugscherfestigkeit auf Stahl ($N/mm^2$) | 23,9 | 26,0 | 25,8 | 26,7 | 22,9 | 18,2 |
| T-Peel (N/mm) | <0,5 | 2,3 | 4,0 | 7,8 | 6,3 | 5,0 |
| Bruchbild (% Kohäsionsbruch) | 0 | 0 | 0 | 100 | 100 | 100 |
| Glasübergangstemp. (°C) | 104 | 97 | 91 | 87 | 72 | 61 |

Beispiele 7-8:

Herstellung von Giesskörpern und Bestimmung der Risszähigkeit $G_{Ic}$

Eine Mischung von 200 g Epoxidharz auf Bisphenol A-Basis (Epoxidgehalt 5,4 Val/kg), 10 g Butandioldiglycidether (Epoxidgehalt 9,2 Val/kg), 22,8 g Dicyandiamid, 1,0 g Chlortoluron, 2,0 g pyrogene Kieselsäure und die in Tabelle II beschriebenen Mengen der Komponenten aus Beispielen A1 und A2 werden zu einer 150 × 60 × 4 mm Platte vergossen und 2 Stunden bei 140°C und 1 Stunde bei 160°C gehärtet. Die Glastemperatur ($T_g$) wird mittels thermomechanischer Analyse (TMA) bestimmt. Die Risszähigkeit $G_{Ic}$ wird bei variabler Messgeschwindigkeit an polierten gekerbten 4 × 10 × 60 mm Proben im 3-Punkt Biegetestmodus gemessen, wobei die Rissbildung mit einer Rasierklingeneinkerbung initiiert wird. Die Resultate sind in Tabelle II zusammengefasst.

Tabelle II: Risszähigkeiten $G_{Ic}$ von Formstoffen sowie Abhängigkeit der Risszähigkeit von der Reissgeschwindigkeit

| Bsp. Nr. | phenol-terminiertes Polyurethan 1A (g) | Acrylnitril/ Butandien-Epoxidharz-addukt 1B (g) | $T_g$ (°C) | Risszähigkeit $G_{Ic}$ (kJ/m²) als Funktion der Reissgeschwindigkeit (m/s) | | | | |
|---|---|---|---|---|---|---|---|---|
| | | | | $2,5\cdot10^{-5}$ | $2,5\cdot10^{-4}$ | $9,7\cdot10^{-2}$ | 0,52 | 1,84 |
| 7 | 20 | 20 | 104 | 2,76 | - | 1,52 | 0,53 | 0,48 |
| 8 | 40 | 40 | 94 | 5,96 | 5,80 | 5,20 | 2,56 | 1,22 |

Beispiel 9 :

Eine Mischung von 30 g eines carboxylterminierten Acrylnitril/Butadien-Copolymers (26% Acrylnitrilgehalt, Säurezahl 32 mg KOH/g), 70 g Butandioldiglycidether und 1,2 g Triphenylphosphin werden 2 Stunden bei 150°C erhitzt bis sich ein Addukt mit einer Viskosität nach Epprecht von 560 mPas und einem Epoxidgehalt von 6,0 Val/kg gebildet hat. 15 g dieses Adduktes werden auf einem Dreiwalzenstuhl mit 15 g des phenolterminierten Polyurethans 1A sowie 5 g Epoxidharz auf Bisphenol A-Basis (Epoxidgehalt 5,4 Val/kg), 3 g aromatischem Verdünner (Actrel 400), 8 g Wollastonit P1, 4 g Talk und 0,6 g pyrogener Kieselsäure (Aerosil 380) sowie 0,7 g Dicyandiamid und 0,2 g Chlortoluron vermischt. Nach 30 Minuten Härtung bei 180°C erhält man eine flexible Masse, welche beim Verkleben die folgenden Werte ergibt :

Zugscherfestigkeit auf sandgestrahltem und mit Aceton entfettetem 1,5 mm dicken Aluminiumblech : 3,8 N/mm², Winkelschälfestigkeit auf mit Aceton entfettetem 0,8 mm dicken Stahl : 1,6 N/mm.

Beispiel 10 :

Eine Mischung von 70 g Epoxidharz auf Bisphenol A-Basis (Epoxidgehalt 5,4 Val/kg), 5 g Butandioldiglycidether (Epoxidgehalt 9,2 Val/kg), 0,1 g Glycidyloxypropyltrimethoxysilan, 7 g pyrogene Kieselsäure, 9,8 g Dicyandiamid, 0,5 g Chlortoluron, 30 g Wollastonit P1, 30 g eines Pfropfpolymeren von Styrol/Acrylnitril auf ein Polybutadienmikrogel (ABS Pulver, Novodur A90 von Bayer) sowie 30 g des phenol-terminierten Polyurethans 1A wird zum Verkleben von 1,5 mm dicken, mit Aceton entfetteten Aluminiumblechen verwendet. Die Winkelschälfestigkeit wird durch Verkleben von mit Aceton entfetteten 0,8 mm dicken Stahlblechen ermittelt.
Zugscherfestigkeit auf Aluminium : 25,2 N/mm²
Winkelschälfestigkeit auf Stahl : 3,0 N/mm.

Beispiele 11-15 :

A. Herstellung der Komponenten

Phenolterminiertes Präpolymer für Beispiel 11 :

Unter Stickstoff legt man in einem trockenen Planschliffkolben 84 g Hexamethylendiisocyanat vor und gibt innerhalb einer Stunde bei 85°C 500 g trockenes Polypropylenglykol ($M_w$ 2000) zu, rührt 2 Stunden bei 100°C und 1 Stunde bei 135°C bis ein Isocyanatgehalt von 3,2% erreicht ist. Dieses Präpolymer gibt man bei 100°C zu einer Mischung aus 155 g 3,3'-Diallylbisphenol A und 0,1 ml Dibutylzinndilaurat. Nach 3 Stunden Rühren bei 100°C kann kein freies Isocyanat mehr nachgewiesen werden und man erhält 500 g eines viskosen Harzes mit den folgenden Analysedaten :
Viskosität $\eta_{40}$ = 390000 mPas ;
Phenolgehalt : 1,4 Val/kg ;
Molekulargewicht (GPC) : $M_n$ = 2285, $M_w/M_n$ = 24.

Phenolterminiertes Präpolymer für Beispiel 12 :

Unter Stickstoff legt man in einem trockenen Planschliffkolben 54,4 g Hexamethylendiisocyanat vor, gibt bei 100°C nacheinander 354 g trockenes Polypropylenglykol ($M_w$ = 2000), 1,8 g Trimethylolpropan, 0,1 ml Dibutylzinndilaurat und rührt 2 Stunden bei 100°C bis ein Isocyanatgehalt von 3,5% erreicht ist. Dieses Präpolymer gibt man zu einer Lösung von 100 g Bisphenol A in 300 ml trockenem Dioxan und kocht 5 Stunden am Rückfluss. Dann wird das Dioxan bei 100°C/1,33 Pa abgezogen und man erhält ein viskoses Harz mit den folgenden Analysedaten :
Viskosität $\eta_{80}$ = 60160 mPas ;
Molekulargewicht (GPC) : $M_w$ = 31500 ;
Phenolgehalt : 1,8 Val/kg.

Phenolterminiertes Präpolymer für Beispiel 13 :

Unter Stickstoff legt man in einem trockenen Planschliffkolben 40,8 g Hexamethylendiisocyanat vor und gibt bei 100°C 265,5 g trockenes Polybutylenglykol ($M_w$ = 2000), 1,35 g Trimethylolpropan und 0,1 ml Dibutylzinndilaurat zu und rührt 2 Stunden bei 100°C. Das erhaltene Präpolymer wird bei 80°C zu 101,3 g trockenem 3,3'-Diallylbisphenol A gegeben und 4 Stunden bei 100°C und 3 Stunden bei 110°gerührt bis kein freies Isocyanat mehr nachweisbar war. Man erhält ein viskoses Harz mit den folgenden Analysedaten :
Viskosität $\eta_{80}$ = 56000 mPas ;
Molekulargewicht (GPC) : $M_n$ = 1250, $M_w/M_n$ = 17 ;
Phenolgehalt : 1,55 Val/kg.

Phenolterminiertes Präpolymer für Beispiel 14 :

Unter Stickstoff legt man in einem trockenen Planschliffkolben 67,2 g Hexamethylendiisocyanat vor und gibt innerhalb von 15 Minuten bei 85°C 354 g trockenes Polypropylenglykol ($M_w$ = 2000), 1,8 g Trimethylolpropan und 0,1 ml Dibutylzinndilaurat zu und rührt 2 Stunden bei 100°C. Dieses Präpolymer gibt man bei 100°C zu 135 g trockenem 3,3'-Diallylbisphenol A und rührt 5 Stunden bei 100°C und 2 Stunden bei 130°C. Es wird ein viskoses Harz mit den folgenden Analysedaten erhalten :
Viskosität $\eta_{40}$ = 133000 mPas ;
Molekulargewicht (GPC) : $M_n$ = 1420, $M_w/M_n$ = 11,5 ;
Phenolgehalt : 1,6 Val/kg.

Phenolterminiertes Präpolymer für Beispiel 15 :

Unter Stickstoff legt man in einem trockenen Planschliffkolben 54,4 g Hexamethylendiisocyanat vor, gibt bei 100°C nacheinander 354 g trockenes Polypropylenglykol ($M_w$ = 2000), 1,8 g Trimethylolpropan, 0,1 ml Dibutylzinndilaurat und rührt 2 Stunden bei 100°C bis ein Isocyanatgehalt von 2,5% erreicht ist. Dann lässt man dieses Präpolymer zu einer Lösung von 100 g Bisphenol A in 300 ml trockenem Dioxan zufliessen und kocht 5 Stunden am Rückfluss. Das Dioxan wird bei 100°C/1,33 Pa im Vakuum abgezogen und man erhält ein viskoses Harz mit den folgenden Analysedaten :
Viskosität $\eta_{80}$ = 92160 mPas ;
Molekulargewicht (GPC) : $M_w$ = 25260 ; $M_n$ = 840, $M_w/M_n$ = 30 ;
Phenolgehalt : 1,8 Val/kg.

B. Herstellung und Prüfung von Klebstoff-Formulierungen

Allgemeine Arbeitsvorschrift wie in Beispiel 1-6

Tabelle III: Getestete Klebstofformulierungen

| Beispiel Nr. | 11 | 12 | 13 | 14 | 15 |
|---|---|---|---|---|---|
| Diglycidylether auf Bisphenol-A Basis (Epoxidgehalt 5,4 Val/kg) | 70 | 70 | 70 | 70 | 70 |
| Butandioldiglycidether (Epoxidgehalt 9,2 Val/kg) | 5 | 5 | 5 | 5 | 5 |
| Glycidyloxypropyltrimethoxysilan | 0,1 | 0,1 | 0,1 | 0,1 | 0,1 |
| Wollastonit P1 | 30 | 30 | 30 | 30 | 30 |
| Dicyandiamid | 9,8 | 9,8 | 9,8 | 9,8 | 9,8 |
| Chlortoluron | 0,5 | 0,5 | 0,5 | 0,5 | 0,5 |
| Pyrogene Kieselsäure (Aerosil 380) | 7,0 | 7,0 | 7,0 | 7,0 | 7,0 |
| Addukt 1B | 30 | 30 | 30 | 30 | 30 |
| Phenol-terminiertes Polyurethan | 30 | 30 | 30 | 30 | 30 |
| (Gew.% Polyurethan) | 16 | 16 | 16 | 16 | 16 |
| Zugscherfestigkeit auf Al ($N/mm^2$) | 32,0 | 30,3 | 32,6 | 32,4 | 32,1 |
| Zugscherfestigkeit auf Stahl ($N/mm^2$) | 24,0 | 23,4 | 23,6 | 25,2 | 27,7 |
| Winkelschälfestigkeit auf Stahl (N/mm) | 8,7 | 4,5 | 7,4 | 4,9 | 5,7 |
| Bruchbild (% Kohäsionbruch) | 90 | 80 | 90 | 70 | 40 |
| Glasübergangstemp. (°C) | 82 | 97 | 87 | 84 | 94 |

Beispiele 16-20:

A. Herstellung der phenolterminierten Polyurethane Präpolymer für Beispiel 16:

Unter Stickstoff legt man in einem trockenen Planschliffkolben 76 g Isophorondiioscyanat vor und gibt bei 100°C nacheinander 303 g Polybutylenglykol ($M_w$ = 2000), 1,5 g Trimethylolpropan und 0,1 ml Dibutylzinndilaurat und rührt 2 Stunden bei 100°C bis ein Isocyanatgehalt von 3,3% erreicht ist. Dieses Präpolymer gibt man zu 115 g trockenem 3,3'-Diallylbisphenol A und rührt 3 Stunden bei 80°C und 30 Minuten bei 105°C bis kein freies Isocyanat mehr nachweisbar ist. Man erhält ein viskoses Harz mit den folgenden Analysendaten:
Viskosität $\eta_{80}$ = 64000 mPas;
Molekulargewicht (GPC): $M_n$ = 1740, $M_w/M_n$ = 8,8;
Phenolgehalt: 1,56 Val/kg.

Präpolymer für Beispiel 17:

Unter Stickstoff legt man in einem trockenen Planschliffkolben 88,8 g Isophorondiisocyanat vor und gibt

bei 100°C innerhalb von 15 Minuten nacheinander 354 g Polypropylenglykol ($M_w$ 2000), 1,8 g Trimethylolpropan und 0,1 ml Dibutylzinndilaurat zu und rührt 2 Stunden bei 100°C bis ein Isocyanatgehalt von 4,0% erreicht ist. Dieses Präpolymer gibt man zu 135 g trockenem 3,3'-Diallylbisphenol A und rührt 3 Stunden bei 80°C und 30 Minuten bei 100°C bis kein freies Isocyanat mehr nachweisbar ist. Man erhält ein viskoses Harz mit den folgenden Analysedaten :
Viskosität $\eta_{80}$ = 12640 mPas ;
Molekulargewicht (GPC) : $M_n$ = 1630, $M_w/M_n$ = 7,2 ;
Phenolgehalt : 1,5 Val/kg.

Präpolymer für Beispiel 18 :

Unter Stickstoff legt man in einem trockenen Planschliffkolben 88,8 g Isophorondiisocyanat vor und gibt bei 100°C innerhalb von 15 Minuten nacheinander 354 g Polypropylenglykol ($M_w$ 2000), 1,8 g Trimethylolpropan und 0,1 ml Dibutylzinndilaurat zu und rührt 2 Stunden bei 100°C bis ein Isocyanatgehalt von 4,0% erreicht ist. Dann gibt man 44 g p-Aminophenol zu und rührt 3 Stunden bei 120°C. Man erhält ein viskoses Harz mit den folgenden Analysedaten :
Viskosität $\eta_{80}$ = 42800 mPas ;
Molekulargewicht (GPC) : $M_n$ = 1090, $M_w/M_n$ = 5,8 ;
Phenolgehalt : 0,83 Val/kg.

Präpolymer für Beispiel 19 :

Unter Stickstoff legt man in einem trockenen Planschliffkolben 88,8 g Isophorondiisocyanat vor und gibt bei 100°C innerhalb von 15 Minuten nacheinander 354 g Polypropylenglykol ($M_w$ = 2000), 1,8 g Trimethylolpropan und 0,1 ml Dibutylzinndilaurat zu und rührt 2 Stunden bei 100°C bis ein Isocyanatgehalt von 4,0% erreicht ist. Dann gibt man 118 g Bisphenol A zu und rührt 3 Stunden bei 120°C bis kein freies Isocyanat mehr nachweisbar ist. Man erhält ein viskoses Harz mit den folgenden Analysedaten :
Viskosität $\eta_{80}$ = 11360 mPas ;
Molekulargewicht (GPC) : $M_n$ = 620, $M_w/M_n$ = 9,3 ;
Phenolgehalt : 2,4 Val/kg.

Präpolymer für Beispiel 20 :

Unter Stickstoff legt man in einem trockenen Planschliffkolben 70 g Toluylendiisocyanatisomerengemisch vor und gibt bei 100°C nacheinander 354 g Polypropylenglykol ($M_w$ 2000), 1,8 g Trimethylolpropan, 0,1 ml Dibutylzinndilaurat zu und rührt 2 Stunden bei 100°C bis ein Isocyanatgehalt von 4,0% erreicht ist. Dieses Präpolymer lässt man bei 100°C zu 135 g Diallylbisphenol A fliessen und rührt 3 Stunden bei 100°C bis kein freies Isocyanat mehr nachweisbar ist. Es wird ein viskoses Harz mit den folgenden Analysedaten erhalten :
Viskosität $\eta_{80}$ = 17920 mPas ;
Molekulargewicht (GPC) : $M_n$ = 2000, $M_w/M_n$ = 6,4 ;
Phenolgehalt : 2,2 Val/kg.

B. Klebstoffherstellung und Prüfung

Es wird wie in Beispiel 1 beschrieben verfahren. Bei der Messung der Winkelschälfestigkeit ("T-Peel") auf öligem Stahl werden die 0,8 mm dicken Stahlprüfkörper mit Aceton gereinigt, bei 80°C im Umluftofen getrocknet, dann in eine Mischung aus 10 Teilen Korrosionsschutzöl (P80 von Pfinders Nachf. GmbH & Co. D-7030 Böblingen) und 90 Teilen n-Heptan eingetaucht und 10 Minuten bei 80°C im Umluftofen getrocknet. Die Ergebnisse sind in Tabelle IV zusammengefasst.

Tabelle IV: Getestete Klebstofformulierungen

| Beispiel Nr. | 16 | 17 | 18 | 19 | 20 |
|---|---|---|---|---|---|
| Diglycidylether auf Bisphenol-A Basis (Epoxidgehalt 5,4 Val/kg) | 70 | 70 | 70 | 70 | 70 |
| Butandioldiglycidether (Epoxidgehalt 9,2 Val/kg) | 5 | 5 | 5 | 5 | 5 |
| Glycidyloxypropyltrimethoxysilan | 0,1 | 0,1 | 0,1 | 0,1 | 0,1 |
| Wollastonit P1 | 30 | 30 | 30 | 30 | 30 |
| Dicyandiamid | 9,8 | 9,8 | 9,8 | 9,8 | 9,8 |
| Chlortoluron | 0,5 | 0,5 | 0,5 | 0,5 | 0,5 |
| Pyrogene Kieselsäure (Aerosil 380) | 7,0 | 7,0 | 7,0 | 7,0 | 7,0 |
| Addukt 1B | 30 | 30 | 30 | 30 | 30 |
| Phenol-terminiertes Polyurethan | 30 | 30 | 30 | 30 | 30 |
| (Gew.% Polyurethan) | 16 | 16 | 16 | 16 | 16 |
| Zugscherfestigkeit auf Al ($N/mm^2$) | 27,0 | 25,3 | 26,9 | 25,3 | 24,6 |
| Zugscherfestigkeit auf Stahl ($N/mm^2$) | 23,4 | 24,6 | 26,4 | 23,9 | 24,0 |
| Winkelschälfestigkeit auf entfettetem Stahl (N/mm) | 5,0 | 8,1 | 5,8 | 5,3 | 6,0 |
| (% Kohäsionsbruch) | (30) | (90) | (70) | (50) | (30) |
| Winkelschälfestigkeit auf öligem Stahl (N/mm) | 4,9 | 6,9 | 4,9 | 6,5 | 5,4 |
| (% Kohäsionsbruch) | (20) | (80) | (30) | (80) | (30) |

Beispiele 21-26 :

A. Herstellung von Präpolymeren

Addukt 23

In einem Planschliffkolben mit Rührer, Stickstoffeinleitung und Rückflusskühler werden 680 g Diglycidylether von Bis(4-hydroxyphenyl)-methan (Epoxidgehalt 5,8 Val/kg), 319 g carboxylterminiertes Acrylnitril/Butadien-Copolymer (26% Acrylnitrilgehalt, Säurezahl 32 mg KOH/g) und 1 g Triphenylphosphin 2 Stunden auf 150°C erhitzt bis sich ein viskoses Harz mit einem Epoxidgehalt von 3,5 Val/kg gebildet hat.

Polyurethan Addukt 25

In einem Planschliffkolben mit Rührer, Stickstoffeinleitung und Rückflusskühler werden 750 g des phenolterminierten Präpolymers 1A mit 248 g Butandioldiglycidether (Epoxidgehalt 8,0 Val/kg) und 2 g Triphenylphosphin 2 Stunden auf 150°C erhitzt, bis sich ein viskoses Harz mit einem Epoxidgehalt von 1,26 Val/kg gebildet

hat.

B. Herstellung und Prüfung der Klebstoffmischungen

Auf einem Dreiwalzenstuhl werden die in Tabelle V beschriebenen Mischungen hergestellt und zur Verklebung von öligem Stahl eingesetzt.

Zugscherfertigkeiten auf beöltem Stahl 1403 (1,5 mm Dicke) werden nach DIN 53283 gemessen.

Winkelschälfestigkeiten (T-Perl) auf beöltem Stahl 1403 (0,6 mm Dicke) werden nach DIN 53282 bestimmt.

Bruchdehnungen des Materials werden im Zugversuch ISO R 527 an Standardprüfkörpern bestimmt.

In allen Fällen erfolgt die Härtung 30 Minuten bei 180°C.

Die Energieabsorption wird in einem modifizierten Fallbolzenversuch ("Impact Peel Test") gemessen, wobei ein 2 mm dickes Stahlblech (150 × 20 mm) auf eine durchbohrte Stahlplatte (150 × 60 × 20 mm, Durchmesser der Bohrung 25 mm) geklebt wird (Härtung 30'/180°C). Durch diese Bohrung wird mit dem CEAST Fallbolzengerät durch einen Bolzen (10,7 kg, Durchmesser 12,6 mm) aus 2 m Fallhöhe das Stahlblech weggeschlagen und gleichzeitig die Energieaufnahme gemessen.

Tabelle V: Getestete Klebstofformulierungen

| Beispiel Nr. | 21 | 22 | 23 | 24 | 25 | 26 |
|---|---|---|---|---|---|---|
| Epoxidharz auf Bisphenol-A Basis (Epoxidgehalt 5,3 Val/kg) | 25 | 9 | 25 | 25 | 25 | 25 |
| Epoxidharz auf Bis(4-hydroxyphenyl)-methan-Basis (Epoxid gehalt 5,8 Val/kg) | - | 16 | - | - | - | - |
| Addukt 1B | 32 | 32 | - | - | - | - |
| Addukt 23 | - | - | 30 | 30 | 30 | 30 |
| Phenolterm. Polyurethan 1A | 8 | 8 | 8 | - | - | - |
| Phenolterm. Polyurethan 16 | - | - | - | 8 | - | - |
| Addukt 25 | - | - | - | - | 15 | 25 |
| Dicyandiamid | 4,7 | 4,7 | 4,7 | 4,7 | 4,7 | 4,7 |
| Wollastonit | 10 | 10 | 10 | 10 | 10 | 10 |
| Pyrogene Kieselsäure (Aerosil® R 202) | 3 | 3 | 3 | 3 | 3 | 3 |
| Zugscherfestigkeit auf öligem Stahl ($N/mm^2$) | 25 | 26 | 26 | 27 | 25 | 26 |
| Winkelschälfestigkeiten auf öligem Stahl (N/mm) | 5,0 | 6,0 | 4,8 | 5,5 | 5,2 | 7,0 |
| Energieabsorption im "Impact Peel" Test (J) | 10,5 | 13,0 | 12,3 | 12,0 | 12,9 | 15,0 |
| Bruchdehnung im Zugversuch (%) | 9,0 | 9,0 | 10,0 | 11,0 | 10,0 | 15,0 |

Beispiel 27 :

Auf einem Dreiwalzenstuhl wird eine Mischung aus 35 Teilen Epoxidharz auf Bisphenol A-Basis (Epoxidgehalt 5,3 Val/kg), 2,5 Teilen Butandioldiglycidether (Epoxidgehalt 8,0 Val/kg), 15 Teilen Addukt 1B, 0,1 Teilen Glycidyloxypropyltrimethoxysilan, 15 Teilen Wollastonit, 4,9 Teilen Dicyandiamid, 0,25 Teilen Chlortoluron, 3,5 Teilen pyrogener Kieselsäure (Aerosil® 380) und 15 Teilen der phenolterminierten Polyurethans 1A hergestellt. Die Härtung erfolgt 1 Stunde bei 180°C. Winkelschälfestigkeiten auf entfettetem Stahl (0,6 mm Dicke) [DIN 53282] und das Zug Dehnungsverhalten [ISO R 527] werden bestimmt.

Winkelschälfestigkeit: 6,7 N/mm;
Bruchdehnung: (23°C) 13,8 %;
(-30°C) 5,0 %;
Elastizitätsmodul: (23°C) 2,85 GPa;
(-30°C) 3,83 GPa.

Ferner wird im Fall der Winkelschälfestigkeiten der Einfluss der Messgeschwindigkeit untersucht :

| Zuggeschwindigkeit (m/s) | Winkelschälfestigkeit (N/mm) |
|---|---|
| 0,0025 | 8 |
| 1,99 | 13 |
| 5,01 | 15 |
| 10,0 | 19,3 |

Beispiele 28-41 :

A. Herstellung von Präpolymeren

Addukt 28

Unter Stickstoff werden 438 g Epoxidharz auf Bisphenol A-basis (5,3 Val/kg), 38,2 g Bisphenol A, 119 g carboxylterminiertes Acrylnitril/Butadien-Copolymer (Acrylnitrilgehalt 18%, Säurezahl 29 mg KOH/g) und 4,8 g Triphenylphosphin 2 Stunden auf 140°C erhitzt, bis sich ein viskoses Harz mit einem Epoxidgehalt von 3,3 Val/kg und einer Viskosität nach Methode Epprecht von $\eta_{40}$ = 74240 mPas gebildet hat.

Phenolterminiertes Präpolymer für Beispiel 29

Unter Stickstoff legt man in einem trockenen Planschliffkolben 54,4 g Hexamethylendiisocyanat vor und gibt bei 100°C innerhalb von 60 Minuten eine Mischung aus 200 g trockenes dihydroxylterminiertes Polypropylenglykol ($M_n$ = 2000), und 0,1 ml Dibutylzinndilaurat zu. Dann versetzt man diese Reaktionsmischung mit 11,0 g 1,4-Cyclohexandimethanol, rührt 60 Minuten bei 100°C und gibt dieses so erhaltene Präpolymer unter Stickstoff innerhalb von 30 Minuten bei 100°C zu 135 g 3,3'-Diallylbisphenol A. Nach dreistündigem Rühren bei 100°C ist kein freies Isocyanat mehr nachweisbar, und man erhält ein viskoses Harz mit den folgenden Analysendaten :
Viskosität $\eta_{80}$ = 9600 mPas.

Phenolterminiertes Präpolymer für Beispiel 30

Unter Stickstoff legt man in einem Planschliffkolben 33,9 g Isophorondiisocyanat und 0,1 ml Dibutylzinndilaurat vor und gibt bei 100°C innerhalb von 1 Stunde eine Mischung aus 137 g trockenem dihydroxylterminiertem Polypropylenglykol ($M_n$ = 2000) und 68,5 g trihydroxylterminiertem Polypropylenglykol ($M_n$ = 4000) zu.

Nachdem 2 Stunden bei 100°C gerührt wurde gibt man dieses Präpolymer zu 50 g 3,3'-Diallylbisphenol A und rührt 3 Stunden bis kein freies Isocyanat mehr nachweisbar ist. Man erhält ein viskoses Harz mit den folgenden Analysendaten :
Viskosität $\eta_{40}$ = 24600 mPas ;
Phenolgehalt : 1,15 Val/kg.
Molekulargewicht (GPC) : $M_n$ = 1830, $M_w/M_n$ = 16.

Phenolterminiertes Präpolymer für Beispiel 31

Unter Stickstoff legt man in einem trockenen Planschliffkolben 71,8 g Isophorondiisocyanat vor, gibt ein Mischung aus 354 g trockenem dihydroxylterminierten Polytetrahydrofuran ($M_n$ = 2000), 1,8 g Trimethylolpropan und 0,1 ml Dibutylzinndilaurat zu und rührt 2 Stunden bei 100°C, bis ein Isocyanatgehalt von 2,3% erreicht ist. Dieses so erhaltene Präpolymer lässt man bei 80°C zu 134 g 3,3'-Diallylbisphenol A fliessen. Nach 3 Stunden Rühren bei 80°C ist kein freies Isocyanat mehr nachweisbar, und man erhält ein viskoses Harz mit den folgenden Analysendaten :
Viskosität $\eta_{80}$ = 37760 mPas ;
Molekulargewicht (GPC) : $M_n$ = 1520, $M_w/M_n$ = 13,1.

Phenolterminiertes Präpolymer für Beispiel 32

Unter Stickstoff legt man in einem trockenen Planschliffkolben 88,8 g Isophorondiisocyanat vor und gibt bei 80°C unter Rühren innerhalb von 30 Minuten eine Mischung aus 354 g trockenem dihydroxylterminierten Polycaprolacton ($M_n$ = 2000), 1,8 g Trimethylolpropan und 0,1 ml Dibutylzinndilaurat dazu. Nach zwei Stunden gibt man das so erhaltene Präpolymer zu 150 g 3,3'-Diallylbisphenol A rührt weitere 3 Stunden bei 80°C bis kein freies Isocyanat mehr nachweisbar ist. Man erhält ein halbfestes Harz mit den folgenden Analysendaten:
Viskosität $\eta_{80}$ = 5760 mPas.

Phenolterminiertes Präpolymer für Beispiel 33

Unter Stickstoff legt man in einem Planschliffkolben 95,4 g Isophrondiisocyanat vor und gibt bei 80°C 1,8 g Trimethylolpropan und 0,1 ml Dibutylzinndilaurat zu. Danach gibt man bei 80°C innerhalb von 2 Stunden eine Mischung aus 354 g dihydroxylterminiertem Polypropylenglykol ($M_n$ = 2000) und 80 g Bis(aminopropyl)-polytetrahydrofuran ($M_n$ = 750) zu, lässt 2 Stunden reagieren und setzt schliesslich 150 g 3,3'-Diallyl-bisphenol A zu. Nach 3 Stunden Reaktion bei 80°C ist kein freies Isocyanat mehr nachweisbar und man erhält ein viskoses Harz mit den folgenden Analysendaten :
Viskosität $\eta_{80}$ = 40960 mPas ;
Molekulargewicht $M_n$ = 1200, $M_w/M_n$ = 18.

Phenolterminiertes Präpolymer für Beispiel 34

Unter Stickstoff gibt man in einem trockenen Planschliffkolben zu einem Gemisch aus 24,6 g 3,3'-Diallylbisphenol A und 0,1 ml Dibutylzinndilaurat, 30 g Bis(isocyanatopropyl)-polytetrahydrofuran (hergestellt durch Phosgenierung eines mit trockenem HCl neutralisierten Bisaminopropyltetrahydrofuran des Molekulargewichts 750, Isocyanatgehalt 8,5%). Nach dreistündigem Rühren bei 100°C erhält man ein viskoses Harz mit den folgenden Analysendaten :
Viskosität $\eta_{25}$ = 122880 mPas ;
Phenolgehalt : 2,88 Val/kg.

Phenolterminiertes Präpolymer für Beispiel 35

Unter Stickstoff gibt man in einem trockenen Kolben zu 50 g Bisisocyanatopropylpolytetrahydrofuran (hergestellt durch Phosgenierung eines mit trockenem HCl neutralisierten Bisaminopropylpolytetrahydrofurans des Molekulargewichts 1100, Isocyanatgehalt 3,1%) 10 g p-Aminophenol und rührt 5 Stunden bei 100°C. Man erhält ein viskoses Harz mit den folgenden Analysendaten :
Viskosität : $\eta_{25}$ = 67840 mPas ;
Phenolgehalt : 2,03 Val/kg.

Phenolterminiertes Präpolymer für Beispiel 36

Unter Stickstoff gibt man in einen trockenen Kolben zu einer Mischung aus 10,8 g 3,3'-Diallyl-bisphenol A und 0,1 ml Dibutylzinndilaurat 29,2 g eines diisocyanatterminierten Polypropylenglykols (Isocyanatgehalt 3,6%, hergestellt durch Phosgenierung eines mit trockenem HCl neutralisierten als Jeffamine® D 2000 von Texaco erhältlichen bisamino-terminierten Polypropylenglykols des Molekulargewichts 2000). Nach 6 Stunden Rühren bei 100°C erhält man ein viskoses isocyanatfreies Harz mit den folgenden Analysendaten :
Viskosität : $\eta_{25}$ = 44160 mPas ;
Phenolgehalt : 1,73 Val/kg.

Phenolterminiertes Präpolymer für Beispiel 37

Unter Stickstoff gibt man in einem trockenen Kolben zu 44,6 g diisocyanatterminiertem Polypropylenglykol (Isocyanatgehalt 3,6%, hergestellt durch Phosgenierung eines mit trockenem HCl neutralisierten als Jeffamine® D 2000 von Texaco erhältlichen bisaminoterminierten Polypropylenglykol des Molekulargewichts 2000) 4,9 g p-Aminophenol. Nach 5 Stunden Rühren bei 100°C erhält man ein isocyanatfreies viskoses Harz mit den folgenden Analysendaten :
Viskosität : $\eta_{25}$ = 63360 mPas ;
Phenolgehalt : 0,96 Val/kg.

Gemisch phenolterminierter Präpolymerer für Beispiel 38

Unter Stickstoff gibt man in einen trockenen Kolben zu 20 g diisocyanatterminiertem Polypropylenglykol (Isocyanatgehalt 20%, hergestellt durch Phosgenierung von Jeffamine® D 230 der Firma Texaco) eine Mischung aus 56,5 g 3,3'-Diallyl-bisphenol A und 0,1 ml Dibutylzinndilaurat. Nach vierstündigem Erhitzen bei 100°C erhält man ein wachsartiges Harz mit den folgenden Analysendaten :
Viskosität : $\eta_{80}$ = 1520 mPas ;
Phenolgehalt : 4,76 Val/kg.
Dieses Präpolymer wird im Gemisch (1 : 3 Gewichtsteile) mit dem unter Beispiel 36 beschriebenen Präpolymer eingesetzt.

Phenolterminiertes Präpolymer für Beispiel 39

Unter Stickstoff gibt man zu 50 g triisocyanat-terminiertem Polypropylenglykol (Isocyanatgehalt 1,6%, hergestellt durch Phosgenierung des kommerziell als Jeffamine® T 3000 erhältlichen Polypropylenglykoltriamins mit dem Molekulargewicht von 3000) 5,5 g p-Aminophenol und kocht 5 Stunden bei 100°C. Man erhält ein viskoses Harz mit den folgenden Analysendaten :
Viskosität $\eta_{25}$ = 89600 mPas ;
Phenolgehalt : 1,0 Val/kg.

Phenolterminiertes Präpolymer für Beispiel 40

Unter Stickstoff gibt man zu 50 g triisocyanat-terminiertem Polypropylenglykol (Isocyanatgehalt 1,6%, hergestellt durch Phosgenierung des mit trockenem HCl neutralisierten kommerziell als Jeffamine® T 3000 erhältlichen Polypropylenglykoltriamins mit dem Molekulargewicht 3000) eine Mischung aus 15,4 g 3,3'-Diallylbisphenol A und 0,1 ml Dibutylzinnndilaurat und erhitzt 6 Stunden bei 100°C und 2 Stunden bei 140°C bis man ein isocyanatfreies Harz mit den folgenden Analysendaten erhält :
Viskosität : $\eta_{25}$ = 87040 mPas ;
Phenolgehalt : 1,53 Val/kg.

Phenolterminiertes Präpolymer für Beispiel 41

Unter Stickstoff gibt man zu 33,6 g Isophorondiisocyanat bei Raumtemperatur unter Rühren eine Mischung aus 68,2 g 3,3'-Diallyl-bisphenol A und 200 g bis-amino-terminiertem Polypropylenglykol ($M_n$ = 2000 ; erhältlich als Jeffamine® D 2000) der Firma Texaco). Nach Abklingen der exothermen Reaktion gibt man 0,1 ml Dibutylzinndilaurat zu und rührt 3 Stunden bei 100°C. Man erhält ein isocyanatfreies hochviskoses Harz mit folgenden Analysedaten :
Viskosität : $\eta_{120}$ = 5120 mPas ;

Phenolgehalt : 1,45 Val/kg.

Phenolterminiertes Präpolymer für Beispiel 42

Unter Stickstoff gibt man zu 27,2 g Hexamethylendiisocyanat innerhalb von einer Stunde bei 100°C eine Mischung aus 313 g hydroxyl-terminiertem mit Styrol-Acrylnitril gepfropftem Polyalkylenether (Niax® 24-32 von Union Carbide), 0,1 ml Dibutylzinndilaurat und 0,9 g Trimethylolpropan. Nach weiteren zwei Stunden gibt man dieses isocyanat-terminierte Präpolymere zu 68,0 g Diallylbisphenol A und rührt 3 Stunden bei 100°C bis kein freies Isocyanat mehr nachweisbar ist. Man erhält ein phenol-terminiertes Pfropfpolymer mit den folgenden Analysendaten :
Viskosität (nach Epprecht) : 40900 mPas (80°C).

Phenolterminiertes Präpolymer für Beispiel 43

Unter Stickstoff gibt man zu 354 g dihydroxyl-terminiertem Polypropylenglykol (MW = 2000) innerhalb von 2 Stunden bei 75°C ein Mischung aus 12,5 g Acrylnitril, 37,5 g Styrol, 0,5 g Azoisobutyronitril und lässt vier Stunden bei 80-85°C Innentemperatur reagieren. Nach Zugabe von 0,1 ml Dibutylzinndilaurat lässt man das Pfropfpolymer bei 100°C innerhalb 1 Stunde zu 54,4 g Hexamethylendiisocyanat fliessen. Nach 3 Stunden Rühren bei 100°C gibt man das so erhaltene Isocyanat-terminierte Pfropfpolymer zu 135 g o,o'-Diallylbisphenol A und lässt zwei Stunden bei 100°C reagieren. Man erhält ein Harz mit den folgenden Analysendaten :
Viskosität (nach Epprecht) : 158720 mPas (40°C) ;
Phenolgehalt : 1,7 Val/kg.

Phenolterminertes Präpolymer für Beispiel 44

Man verfährt wie im Beispiel 43 doch gibt man bei der Pfropfung eine Mischung aus 50 g Styrol und 0,5 g Azoisobutyronitril zu und erhält ein phenolhaltiges Harz mit den folgenden Analysendaten :
Viskosität (nach Epprecht) : 143360 mPas (40°C) ;
Phenolgehalt : 1,6 Val/kg.

Phenolterminiertes Präpolymer für Beispiel 45

Unter Stickstoff legt man in einem trockenen Planschliffkolben 88 g Isophorondiisocyanat von und gibt unter Rühren bei 100°C innerhalb von 1 Stunde eine Mischung aus 25 g hydroxyl-terminiertem Polybutadien (ARCO RD45HT) und 0,1 ml Dibutylzinndilaurat zu. Nachdem 1 Stunde gerührt ist, gibt man innerhalb 1 Stunde 300 g trockenes dihydroxyterminiertes Polybutylenglykol ($M_n$ = 2000) zu und lässt anschliessend 2 Stunden bei 100°C rühren. Das so erhaltene isocyanat-terminierte Präpolymer wird unter Feuchtigkeitsausschluss zu 150 g 3,3'-Diallyl-Bisphenol A gegeben. Nach 3 Stunden Rühren bei 100°C erhält man ein viskoses isocyanatfreies Harz mit den folgenden Analysendaten :
Viskosität (nach Epprecht) : $\eta_{80}$ = 56320 mPas ;
Phenolgehalt : 1,68 Val/kg ;
Molekulargewicht (CPC) : $M_n$ = 1700, $M_w/M_n$ = 90.

Phenolterminiertes Präpolymer für Beispiel 46

Die Präpolymerherstellung wird analog Beispiel 45 ausgeführt, doch verwendet man nun 50 g hydroxylterminiertes Polybutadien (ARCO RD45HT) und 250 g Polybutylenglykol. Man erhält ein viskoses isocyanatfreies Harz mit den folgenden Analysendaten :
Viskosität (nach Epprecht) : $\eta_{80}$ = 84480 mPas ;
Phenolgehalt : 1,76 Val/kg ;
Molekulargewicht (CPC) : $M_n$ = 1890, $M_w/M_n$ = 9,1

B. Klebstoffherstellung und Prüfung

Es wird wie in Beispiel 1 beschrieben verfahren. Die Ergebnisse und die Zusammensetzungen der einzelnen Klebstoffmischungen sind in der folgenden Tabelle VI zusammengefasst.

Tabelle VI Getestete Klebstofformulierungen

| Beispiel Nr. | 28 | 29 | 30 | 31 | 32 | 33 | 34 | 35 | 36 | 37 | 38 | 39 | 40 | 41 | 42 | 43 | 44 | 45 | 46 |
|---|---|---|---|---|---|---|---|---|---|---|---|---|---|---|---|---|---|---|---|
| Epoxidharz auf Bisphenol A Basis (5,4 Val/kg) | 35 | 35 | 35 | 35 | 35 | 35 | 35 | 35 | 35 | 35 | 35 | 35 | 35 | 35 | 70 | 70 | 70 | 35 | 35 |
| Butandioldiglycidether (Epoxidgehalt 9,2 Val/kg) | 2,5 | 2,5 | 2,5 | 2,5 | 2,5 | 2,5 | 2,5 | 2,5 | 2,5 | 2,5 | 2,5 | 2,5 | 2,5 | 2,5 | 5 | 5 | 5 | 2,5 | 2,5 |
| Glycidyloxypropyltrimethoxysilan | 0,05 | 0,1 | 0,1 | 0,1 | 0,1 | 0,1 | 0,1 | 0,1 | 0,1 | 0,1 | 0,1 | 0,1 | 0,1 | 0,1 | 0,1 | 0,1 | 0,1 | - | - |
| Wollastonit | 15 | 15 | 15 | 15 | 15 | 15 | 15 | 15 | 15 | 15 | 15 | 15 | 15 | 15 | 30 | 30 | 30 | 15 | 15 |
| Dicyandiamid | 4,9 | 4,9 | 4,9 | 4,9 | 4,9 | 4,9 | 4,9 | 4,9 | 4,9 | 4,9 | 4,9 | 4,9 | 4,9 | 4,9 | 9,8 | 9,8 | 9,8 | 4,9 | 4,9 |
| Chlortoluron | 0,25 | 0,25 | 0,25 | 0,25 | 0,25 | 0,25 | 0,25 | 0,25 | 0,25 | 0,25 | 0,25 | 0,25 | 0,25 | 0,25 | 0,5 | 0,5 | 0,5 | 0,25 | 0,25 |
| Pyrogene Kieselsäure | 3,5 | 3,5 | 3,5 | 3,5 | 3,5 | 3,5 | 3,5 | 3,5 | 3,5 | 3,5 | 3,5 | 3,5 | 3,5 | 3,5 | 7,0 | 7,0 | 7,0 | 3,5 | 3,5 |
| Präpolymer 1A | 15 | - | - | - | - | - | - | - | - | - | - | - | - | - | - | - | - | - | - |
| Addukt 1B | - | 15 | 15 | 15 | 15 | 15 | 15 | 15 | 15 | 15 | 15 | 15 | 15 | 15 | 30 | 30 | 30 | 15 | 15 |
| Addukt 28 | 15 | - | - | - | - | - | - | - | - | - | - | - | - | - | - | - | - | - | - |

Tabelle VI (Fortsetzung)

| Beispiel Nr. | 28 | 29 | 30 | 31 | 32 | 33 | 34 | 35 | 36 | 37 | 38 | 39 | 40 | 41 | 42 | 43 | 44 | 45 | 46 |
|---|---|---|---|---|---|---|---|---|---|---|---|---|---|---|---|---|---|---|---|
| Phenolterminiertes Präpolymer | - | 15 | 15 | 15 | 15 | 15 | 15 | 15 | 15 | 15 | 16<br>4+12 | 15 | 15 | 15 | 30 | 30 | 30 | 15 | 15 |
| Zugscherfestigkeit auf Al ($N/mm^2$) | 28,7 | 31,3 | 31,3 | 31,1 | 28,5 | 33,1 | 32,9 | 37,8 | 30,1 | 32,0 | 28,5 | 33,7 | 34,6 | 32,3 | 29,7 | 24,4 | 26,2 | 31,6 | 29,3 |
| Zugscherfestigkeit auf Stahl ($N/mm^2$) | 22,3 | 25,2 | 26,2 | 25,6 | 21,3 | 26,5 | 27,1 | 31,9 | 27,3 | 26,8 | 25,4 | 27,9 | 29,3 | 27,8 | 23,5 | 24,8 | 26,3 | 23,9 | 21,3 |
| T-Peel (N/mm | 5,9 | 4,2 | 6,4 | 6,4 | 2,7 | 5,3 | 3,7 | 3,5 | 6,6 | 6,2 | 7,6 | 4,5 | 8,4 | 3,6 | 4,8 | 8,2 | 6,1 | 5,2 | 6,9 |

**Patentansprüche**

**Patentansprüche für folgende Vertragsstaaten : BE, CH, DE, FR, GB, IT, LI, NL, SE**

1. Zusammensetzungen enthaltend
A) ein Copolymeres auf Basis von mindestens einem 1,3-Dien und mindestens einem polaren, ethylenisch ungesättigten Comonomeren, und
B) eine Verbindung der Formel I

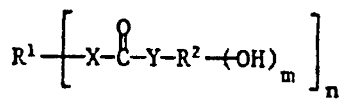

(I),

worin m 1 oder 2 ist, n 2 bis 6 bedeutet,
$R^1$ der n-wertige Rest eines in Epoxidharzen löslichen oder dispergierbaren, elastomeren Präpolymeren nach dem Entfernen der endständigen Isocyanat-, Amino- oder Hydroxylgruppen ist,
X und Y unabhängig voneinander —O— oder —$NR^3$— bedeuten, wobei mindestens eine dieser Gruppen —$NR^3$— sein muss,
$R^2$ ein m + 1-wertiger Rest eines Polyphenols oder Aminophenols nach dem Entfernen der phenolischen Hydroxylgruppen und gegebenenfalls der Aminogruppe ist, und
$R^3$ Wasserstoff, $C_1$-$C_6$Alkyl oder Phenyl bedeutet.

2. Zusammensetzungen gemäss Anspruch 1, worin Komponente A) ein Copolymeres auf Butadienbasis ist.

3. Zusammensetzungen gemäss Anspruch 1, worin Komponente A) ein Copolymeres auf Basis von Butadien-Acrylnitril, Butadien-(Meth)acrylsäureestern, ein Butadien-Acrylnitril-Styrol Pfropfcopolymeres (ABS) oder ein Butadien-methylmethacrylat-Styrol Pfropfcopolymeres (MBS) ist.

4. Zusammensetzungen gemäss Anspruch 1, worin Komponente A) ein flüssiges Butadien-Acrylnitril-Copolymeres ist.

5. Zusammensetzungen gemäss Anspruch 1, worin Komponente A) als Addukt eines Butadien-Acrylnitril-Copolymeren mit gegenüber Epoxidharzen reaktiven funktionellen Gruppen an ein Epoxidharz eingesetzt wird.

6. Zusammensetzungen gemäss Anspruch 1, worin Rest $R^2$ sich ableitet von einem Bisphenol der Formel VI

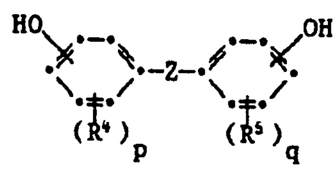

(VI),

worin Z eine direkte C-C-Bindung ist oder ein Brückenglied ausgewählt aus der Gruppe bestehend aus —$CR^6R^7$, —O—, —S—, —$SO_2$—, —CO—, —COO—, —$CONR^8$— und —$SiR^9R^{10}$— ist, $R^4$ und $R^5$ unabhängig voneinander $C_1$-$C_{20}$Alkyl, $C_2$-$C_6$Alkenyl, $C_2$-$C_6$Alkinyl oder Halogen darstellen, p und q unabhängig voneinander 0, 1 oder 2 bedeuten, $R^6$, $R^7$ und $R^8$ unabhängig voneinander Wasserstoff-, —$CF_3$ oder $C_1$-$C_6$Alkyl sind oder $R^6$ und $R^7$ zusammen mit dem gemeinsamen C-Atom einen cycloaliphatischen Rest mit 5-12 Ring C-Atomen bilden und $R^9$ und $R^{10}$ $C_1$-$C_6$Alkyl bedeuten.

7. Zusammensetzungen gemäss Anspruch 1, worin X —NH— ist und Y —NH— oder —O— bedeutet.

8. Zusammensetzungen gemäss Anspruch 1, worin Komponente B) eine Verbindung der Formel I ist, die im wesentlichen frei ist von Isocyanatgruppen, wenigestens zwei freie phenolische Hydroxylgruppen aufweist und die erhältlich ist durch Umsetzung von
a) einem präpolymeren Polyisocyanat, welches
a1) ein Addukt eines Polyisocyanats an eine präpolymere Polyhydroxyl- oder Polysulfhydrylverbindung oder ein Gemisch solcher Verbindungen gegebenenfalls in Kombination mit einem Kettenverlängerer ist, oder
a2) sich ableitet von einem präpolymeren Polyetheramin, mit
b) mindestens einem Phenol mit zwei oder drei phenolischen Hydroxylgruppen oder mit einem Aminophenol mit ein oder zwei phenolischen Hydroxylgruppen.

9. Zusammensetzungen gemäss Anspruch 8, worin die Aufbaukomponente zur Herstellung von Komponente a1) ein hydroxyl-terminierter Polyether oder Polyester ist.

10. Zusammensetzungen gemäss Anspruch 8, worin die Aufbaukomponente zur Herstellung von Komponente a1) ein Gemisch aus einem hydroxyl-terminierten Polybutadien und einem hydroxyl-terminierten Polyalkylenglykol ist oder ein hydroxyl-terminiertes Polyalkylenglykol mit aufgepfropften 1-Olefinen ist.

11. Zusammensetzungen gemäss Anspruch 8, worin das Polyisocyanat zur Herstellung der Komponente a1) ein aliphatisches oder cycloaliphatisches Diisocyanat ist.

12. Zusammensetzungen gemäss Anspruch 1, worin Komponente B) eine Verbinder Formel VII

$$[\{(HO)_{m}R^{2}-X-\overset{O}{\overset{\|}{C}}-NH\}_{r}R^{13}-NH-\overset{O}{\overset{\|}{C}}-O]_{n}R^{14} \qquad (VII)$$

worin $R^2$, m und n die in Anspruch 1 definierte Bedeutung besitzen, r eine ganze Zahl zwischen 1 und 3 ist, X —O— oder—NH— bedeutet, $R^{13}$ der r + 1-wertige Rest eines aliphatischen, cycloaliphatischen, aromatischen oder araliphatischen Polyisocyanates nach den Entfernen der Isocyanatgruppen ist, $R^{14}$ ein n-wertiger hydroxyl-terminierter Polyester- oder Polyetherrest nach dem Entfernen der enständigen OH-Gruppen ist, mit der Massgabe, dass der Index m und die Reste $R^2$ und $R^{13}$ innerhalb eines gegebenen Moleküls unterschiedlich sein können.

13. Zusammensetzungen gemäss Anspruch 12, worin m 1 ist, n 2 oder 3 bedeutet, r 1 ist, X—O— ist, $R^{13}$ sich ableitet von einem aliphatischen oder cycloaliphatischen Diisocyanat und $R^{14}$ ein zwei-oder dreiwertiger Rest eines Polyalkylenetherpolyols mit einem Molekulargewicht von 150 bis 3000 nach dem Entfernen der endständigen Hydroxylgruppen ist.

14. Zusammensetzungen gemäss Anspruch 8, worin Komponente B) erhältlich ist durch Umsetzung von

a1) einem Addukt einer im wesentlichen äquivalenten Menge eines Diisocyanates mit einem Gemisch aus einem di- oder tri-hydroxyl-terminierten Polyether oder Polyester und weniger als 1 Gew.-%, bezogen auf das hydroxyl-terminierte Präpolymere, eines Diols oder Triols und

b1) einer dem NCO-Gehalt im wesentlichen äquivalenten Menge eines Bisphenols oder Trisphenols.

15. Zusammensetzungen gemäss Anspruch 1, enthaltend als Komponente B) Verbindungen der Formel IX

$$\left[(HO)_{m}R^{3}-Y-(\overset{O}{\overset{\|}{C}}-NH-R^{15})_{t}\overset{O}{\overset{\|}{C}}-NH\right]_{n}R^{16} \qquad (IX),$$

worin $R^3$, m und n die in Anspruch 1 definierte Bedeutung besitzen, Y —O— oder —NH— ist, t 0 oder 1 ist, $R^{15}$ der zweiwertige Rest eines aliphatischen, cycloaliphatischen, aromatischen oder araliphatischen Diisocyanats nach dem Entfernen der Isocyanatgruppen ist, und $R^{16}$ der n-wertige Rest eines amino-terminierten Polyalkylenethers nach dem Entfernen der endständigen $NH_2$-Gruppen ist.

16. Zusammsetzungen gemäss Anspruch 15, worin m 1 ist, n 2 oder 3 bedeutet, Y—O— ist, $R^{15}$ sich ableitet von einem aliphatischen, cycloaliphatischen oder aromatischen Diisocyanat und $R^{16}$ ein zwei- oder dreiwertiger Rest eines amino-terminierten Polyalkylenethers mit einem Molekulargewicht von 150 bis 10000 nach dem Entfernen der endständigen Aminogruppen ist.

17. Zusammensetzungen gemäss Anspruch 15, worin m 1 ist, n 2 bedeutet, t 0 ist, Y —O— bedeutet und $R^{16}$ sich ableitet von einem zweiwertigen amino-terminierten Polyalkylenether mit einem Molekulargewicht von 150 bis 6000.

18. Zusammensetzungen gemäss Anspruch 15, worin m und t 1 sind, n 2 bedeutet, $R^{15}$ der zweiwertige Rest eines aliphatischen oder cycloaliphatischen Diisocyanats nach dem Entfernen der Isocyanatgruppen ist und $R^{16}$ sich ableitet von einem zweiwertigen amino-terminierten Polyalkylenether mit einem Molekulargewicht von 150 bis 6000.

19. Zusammensetzungen enthaltend Komponenten A) und B) gemäss Anspruch 1, und C) ein Epoxidharz mit wenigstens zwei 1,2-Epoxidgruppen pro Molekül ; oder enthaltend ein Addukt aus Komponenten A) und einem Epoxidharz, sowie Komponente B) und gegebenenfalls Komponente C) ; oder enthaltend Komponente A), ein Addukt aus Komponente B) und einem Epoxidharz und gegebenenfalls Komponente C) ; oder enthaltend ein Addukt aus Komponente A) und einem Epoxidharz, ein Addukt aus Komponente B) und einem Epoxidharz, sowie gegebenenfalls Komponente C).

20. Zusammensetzungen gemäss Anspruch 19, worin Komponente C) ein Polyglycidylether von Bisphenolen, von Novolaken, die durch Umsetzung von Formaldehyd mit einem Phenol gebildet werden oder von aliphatischen Diolen ist, sowie ein Addukt von Bisphenol A und glycidylisierten aliphatischen Diolen ist.

21. Verfahren zum Härten von Zusammensetzungen enthaltend Komponenten A), B) und C) gemäss Anspruch 19 durch Zugabe eines bei Raumtemperatur oder bei erhöhter Temperatur aktiven Härters D) und gegebenenfalls eines Härtungsbeschleunigers E) und gegebenenfalls Erhitzen, dadurch gekennzeichnet, dass der Anteil von A) und B) mehr als 50 Gew.%, bezogen auf das Gewicht von A), B) und C), ausmacht.

22. Die durch Härtung der Zusammensetzungen gemäss Anspruch 19 erhältlichen gehärteten Produkte.

23. Verwendung der Zusammensetzungen gemäss Anspruch 19 als Klebstoffe, Klebefilme, Patches Matrixharze, Lacke oder Dichtungsmassen.

**Patentansprüche für folgenden Vertragsstaat : ES**

1. Zusammensetzungen enthaltend
A) ein Copolymeres auf Basis von mindestens einem 1,3-Dien und mindestens einem polaren, ethylenisch ungesättigten Comonomeren, und
B) eine Verbindung der Formel I

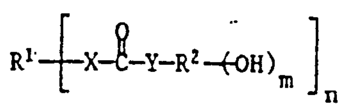

(I),

worin m 1 oder 2 ist, n 2 bis 6 bedeutet,
$R^1$ der n-wertige Rest eines in Epoxidharzen löslichen oder dispergierbaren, elastomeren Präpolymeren nach dem Entfernen der endständigen Isocyanat-, Amino- oder Hydroxylgruppen ist,
X und Y unabhängig voneinander —O— oder —$NR^3$— bedeuten, wobei mindestens eine dieser Gruppen —$NR^3$— sein muss,
$R^2$ ein m + 1-wertiger Rest eines Polyphenols oder Aminophenols nach dem Entfernen der phenolischen Hydroxylgruppen und gegebenenfalls der Aminogruppe ist, und
$R^3$ Wasserstoff, $C_1$-$C_6$Alkyl oder Phenyl bedeutet.

2. Zusammensetzungen gemäss Anspruch 1, worin Komponente A) ein Copolymeres auf Butadienbasis ist.

3. Zusammensetzungen gemäss Anspruch 1, worin Komponente A) ein Copolymeres auf Basis von Butadien-Acrylnitril, Butadien-(Meth)acrylsäureestern, ein Butadien-Acrylnitril-Styrol Pfropfcopolymeres (ABS) oder ein Butadien-methylmethacrylat-Styrol Pfropfcopolymeres (MBS) ist.

4. Zusammensetzungen gemäss Anspruch 1, worin Komponente A) ein flüssiges Butadien-Acrylnitril-Copolymeres ist.

5. Zusammensetzungen gemäss Anspruch 1, worin Komponente A) als Addukt eines Butadien-Acrylnitril-Copolymeren mit gegenüber Epoxidharzen reaktiven funktionellen Gruppen an ein Epoxidharz eingesetzt wird.

6. Zusammensetzungen gemäss Anspruch 1, worin Rest $R^2$ sich ableitet von einem Bisphenol der Formel VI

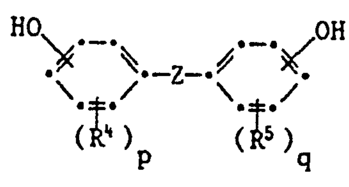

(VI),

worin Z eine direkte C-C-Bindung ist oder ein Brückenglied ausgewählt aus der Gruppe bestehend aus —$CR^6R^7$—, —O—, —S—, —$SO_2$—, —CO—, —COO—, —$CONR^8$— und —$SiR^9R^{10}$— ist, $R^4$ und $R^5$ unabhängig voneinander $C_1$-$C_{20}$Alkyl, $C_2$-$C_6$Alkenyl, $C_2$-$C_6$Alkinyl oder Halogen darstellen, p und q unabhängig voneinander 0, 1 oder 2 bedeuten, $R^6$, $R^7$ und $R^8$ unabhängig voneinander Wasserstoff-, —$CF_3$ oder $C_1$-$C_6$Alkyl sind oder $R^6$ und $R^7$ zusammen mit dem gemeinsamen C-Atom einen cycloaliphatischen Rest mit 5-12 Ring C-Atomen bilden und $R^9$ und $R^{10}$ $C_1$-$C_6$Alkyl bedeuten.

7. Zusammensetzungen gemäss Anspruch 1, worin X —NH— ist und Y —NH— oder —O— bedeutet.

8. Zusammensetzungen gemäss Anspruch 1, worin Komponente B) eine Verbindung der Formel I ist, die

im wesentlichen frei ist von Isocyanatgruppen, wenigstens zwei freie phenolische Hydroxylgruppen aufweist und die erhältlich ist durch Umsetzung von

a) einem präpolymeren Polyisocyanat, welches

a1) ein Addukt eines Polyisocyanats an eine präpolymere Polyhydroxyl- oder Polysulfhydrylverbindung oder ein Gemisch solcher Verbindungen gegebenenfalls in Kombination mit einem Kettenverlängerer ist, oder

a2) sich ableitet von einem präpolymeren Polyetheramin, mit

b) mindestens einem Phenol mit zwei oder drei phenolischen Hydroxylgruppen oder mit einem Aminophenol mit ein oder zwei phenolischen Hydroxylgruppen.

9. Zusammensetzungen gemäss Anspruch 8, worin die Aufbaukomponente zur Herstellung von Komponente a1) ein hydroxyl-terminierter Polyether oder Polyester ist.

10. Zusammensetzungen gemäss Anspruch 8, worin die Aufbaukomponente zur Herstellung von Komponente a1) ein Gemisch aus einem hydroxyl-terminierten Polybutadien und einem hydroxyl-terminierten Polyalkylenglykol ist oder ein hydroxyl-terminiertes Polyalkylenglykol mit aufgepfropften 1-Olefinen ist.

11. Zusammensetzungen gemäss Anspruch 8, worin das Polyisocyanat zur Herstellung der Komponente a1) ein aliphatisches oder cycloaliphatisches Diisocyanat ist.

12. Zusammensetzungen gemäss Anspruch 1 enthaltend als Komponente B) Verbindungen der Formel VII

$$[\{(HO-)_m R^2-X-\overset{O}{\overset{\|}{C}}-NH-\}_r R^{13}-NH-\overset{O}{\overset{\|}{C}}-O-]_n R^{14} \qquad (VII)$$

worin $R^2$, m und n die in Anspruch 1 definierte Bedeutung besitzen, r eine ganze Zahl zwischen 1 und 3 ist, X —O— oder —NH— bedeutet, $R^{13}$ der r + 1-wertige Rest eines aliphatischen, cycloaliphatischen, aromatischen oder araliphatischen Polyisocyanates nach dem Entfernen der Isocyanatgruppen ist, $R^{14}$ ein n-wertiger hydroxyl-terminierter Polyester- oder Polyetherrest nach dem Entfernen der enständigen OH-Gruppen ist, mit der Massgabe, dass der Index m und die Reste $R^2$ und $R^{13}$ innerhalb eines gegebenen Moleküls unterschiedlich sein können.

13. Zusammensetzungen gemäss Anspruch 12, worin m 1 ist, n 2 oder 3 bedeutet, r 1 ist, X —O— ist, $R^{13}$ sich ableitet von einem aliphatischen oder cycloaliphatischen Diisocyanat und $R^{14}$ ein zwei-oder dreiwertiger Rest eines Polyalkylenetherpolyols mit einem Molekulargewicht von 150 bis 3000 nach dem Entfernen der endständigen Hydroxylgruppen ist.

14. Zusammensetzungen gemäss Anspruch 8, worin Komponente B) erhältlich ist durch Umsetzung von

a1) einem Addukt einer im wesentlichen äquivalenten Menge eines Diisocyanates mit einem Gemisch aus einem di- oder tri-hydroxyl-terminierten Polyether oder Polyester und weniger als 1 Gew.-%, bezogen auf das hydroxyl-terminierte Präpolymere, eines Diols oder Triols und

b1) einer dem NCO-Gehalt im wesentlichen äquivalenten Menge eines Bisphenols oder Trisphenols.

15. Zusammensetzungen gemäss Anspruch 1, enthaltend als Komponente B) Verbindungen der Formel IX

$$\left[(HO-)_m R^3-Y-(\overset{O}{\overset{\|}{C}}-NH-R^{15})_t \overset{O}{\overset{\|}{C}}-NH-\right]_n R^{16} \qquad (IX),$$

worin $R^3$, m und n die in Anspruch 1 definierte Bedeutung besitzen, Y —O— oder —NH— ist, t 0 oder 1 ist, $R^{15}$ der zweiwertige Rest eines aliphatischen, cycloaliphatischen, aromatischen oder araliphatischen Diisocyanats nach dem Entfernen der Isocyanatgruppen ist, und $R^{16}$ der n-wertige Rest eines amino-terminierten Polyalkylenethers nach dem Entfernen der endständigen $NH_2$-Gruppen ist.

16. Zusammsetzungen gemäss Anspruch 15, worin m 1 ist, n 2 oder 3 bedeutet, Y—O— ist, $R^{15}$ sich ableitet von einem aliphatischen, cycloaliphatischen oder aromatischen Diisocyanat und $R^{16}$ ein zwei- oder dreiwertiger Rest eines amino-terminierten Polyalkylenethers mit einem Molekulargewicht von 150 bis 10000 nach dem Entfernen der endständigen Aminogruppen ist.

17. Zusammensetzungen gemäss Anspruch 15, worin m 1 ist, n 2 bedeutet, t 0 ist, Y —O— bedeutet und $R^{16}$ sich ableitet von einem zweiwertigen amino-terminierten Polyalkylenether mit einem Molekulargewicht von 150 bis 6000.

18. Zusammensetzungen gemäss Anspruch 15, worin m und t 1 sind, n 2 bedeutet, $R^{15}$ der zweiwertige

Rest eines aliphatischen oder cycloaliphatischen Diisocyanats nach dem Entfernen der Isocyanatgruppen ist und $R^{16}$ sich ableitet von einem zweiwertigen amino-terminierten Polyalkylenether mit einem Molekulargewicht von 150 bis 6000.

19. Zusammensetzungen enthaltend Komponenten A) und B) gemäss Anspruch 1, und C) ein Epoxidharz mit wenigstens zwei 1,2-Epoxidgruppen pro Molekül ; oder enthaltend ein Addukt aus Komponente A) und einem Epoxidharz, sowie Komponente B) und gegebenenfalls Komponente C) ; oder enthaltend Komponente A), ein Addukt aus Komponente B) und einem Epoxidharz und gegebenenfalls Komponente C) ; oder enthaltend ein Addukt aus Komponente A) und einem Epoxidharz, ein Addukt aus Komponente B) und einem Epoxidharz, sowie gegebenenfalls Komponente C).

20. Zusammensetzungen gemäss Anspruch 19, worin Komponente C) ein Polyglycidylether von Bisphenolen, von Novolaken, die durch Umsetzung von Formaldehyd mit einem Phenol gebildet werden oder von aliphatischen Diolen ist, sowie ein Addukt von Bisphenol A und glycidylisierten aliphatischen Diolen ist.

21. Verfahren zum Härten von Zusammensetzungen enthaltend Komponenten A), B) und C) oder Addukte aus diesen Komponenten gemäss Anspruch 19 umfassend die Zugabe eines bei Raumtemperatur oder bei erhöhter Temperatur aktiven Härters D) und gegebenenfalls eines Härtungsbeschleunigers E) und gegebenenfalls Erhitzen, um die Zusammensetzung zu härten.

22. Verfahren gemäss Anspruch 21, dadurch gekennzeichnet, dass der Anteil von A) und B) mehr als 50 Gew.%, bezogen auf das Gewicht von A), B) und C) ausmacht.

23. Verwendung der Zusammensetzungen gemäss Anspruch 19 als Klebstoffe, Klebefilme, Patches, Matrixharze, Lacke oder Dichtungsmassen.

## Claims

### Claims for the following Contracting States : BE CH DE FR GB IT LI NL SE

1. A composition comprising

A) a copolymer based on at least one 1,3-diene and at least one polar, ethylenically unsaturated comonomer, and

B) a compound of the formula I

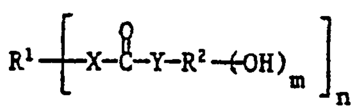

(I)

in which m is 1 or 2, n is 2 to 6,

$R^1$ is the n-valent radical of an elastomeric prepolymer, after the removal of the terminal isocyanate, amino or hydroxyl groups, which is soluble or dispersible in epoxide resins, X and Y independently of one another are —O— or —$NR^3$—, it being necessary for at least one of these groups to be —$NR^3$—,

$R^2$ is an m + 1-valent radical of a polyphenol or aminophenol after the removal of the phenolic hydroxyl groups and optionally of the amino group, and

$R^3$ is hydrogen, $C_1$-$C_6$alkyl or phenol.

2. A composition according to claim 1, wherein component A) is a copolymer based on butadiene.

3. A composition according to claim 1, wherein component A) is a copolymer based on butadiene/acrylonitrile, butadiene/(meth)acrylic acid esters, a butadiene/acrylonitrile/styrene graft copolymer (ABS) or a butadiene/methyl methacrylate/styrene graft copolymer (MBS).

4. A composition according to claim 1, wherein component A) is a liquid butadiene/acrylonitrile copolymer.

5. A composition according to claim 1, wherein component A) is employed in the form of an adduct, of a butadiene/acrylonitrile copolymer having functional groups which are reactive towards epoxide resins, onto an epoxide resin.

6. A composition according to claim 1, in which the radical $R^2$ is derived from a bisphenol of the formula VI

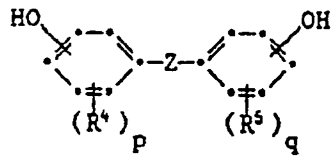

(VI)

in which Z is a direct C-C bond or a bridge member selected from the group consisting of —$CR^6R^7$, —O—, —S—, —$SO_2$—, —CO—, —COO—, —$CONR^8$— and —$SiR^9R^{10}$—, $R^4$ and $R^5$ independently of one another are $C_1$-$C_{10}$alkyl, $C_2$-$C_6$alkenyl, $C_2$-$C_6$alkinyl or halogen, p and q independently of one another are 0, 1 or 2, $R^6$, $R^7$ and $R^8$ independently of one another are hydrogen, —$CF_3$ or $C_1$-$C_6$alkyl, or $R^6$ and $R^7$, together with the common C atom, form a cycloaliphatic radical having 5-12 ring C atoms, and $R^9$ and $R^{10}$ are $C_1$-$C_6$alkyl.

7. A composition according to claim 1, wherein X is —NH— and Y is —NH— or —O—.

8. A composition according to claim 1, wherein component B) is a compound of the formula I which is essentially free from isocyanate groups, contains at least two free phenolic hydroxyl groups and can be obtained by reacting

a) a prepolymer polyisocyanate which

a1) is an adduct of a polyisocyanate onto a prepolymer polyhydroxyl or polysulfhydryl compound or a mixture of such compounds, if appropriate, in combination with a chain lengthener, or

a2) is derived from a prepolymer polyether amine, with

b) at least one phenol having two or three phenolic hydroxyl groups or an aminophenol having one or two phenolic hydroxyl groups.

9. A composition according to claim 8, wherein the synthesis component for the preparation of component a1) is a hydroxyl-terminated polyether or polyester.

10. A composition according to claim 8, wherein the synthesis component for the preparation of component a1) is a mixture of a hydroxyl-terminated polybutadiene and a hydroxyl-terminated polyalkylene glycol, or is a hydroxyl-terminated polyalkylene glycol having grafted-on 1-olefins.

11. A composition according to claim 8, wherein the polyisocyanate for the preparation of the component a1) is an aliphatic or cycloaliphatic diisocyanate.

12. A composition according to claim 1, wherein component B) is a compound of the formula VII

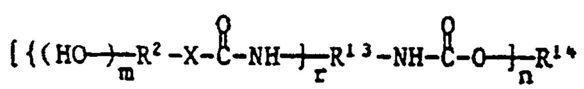

(VII)

in which $R^2$, m and n are as defined in claim 1, r is an integer between 1 and 3, X is —O— or —NH—, $R^{13}$ is the r + 1-valent radical of an aliphatic, cycloaliphatic, aromatic or araliphatic polyisocyanate after the removal of the isocyanate groups, $R^{14}$ is an n-valent, hydroxyl-terminated polyester or polyether radical after the removal of the terminal OH groups, subject to the proviso that the index m and the radicals $R^2$ and $R^{13}$ can be different within a given molecule.

13. A composition according to claim 12, in which m is 1, n is 2 or 3, r is 1, X is —O—, $R^{13}$ is derived from an aliphatic or cycloaliphatic diisocyanate and $R^{14}$ is a divalent or trivalent radical of a polyalkylene ether-polyol having a molecular weight of 150 to 3,000, after the removal of the terminal hydroxyl groups.

14. A composition according to claim 8, wherein component B) can be obtained by reacting

a1) an adduct of an essentially equivalent amount of a diisocyanate with a mixture of a dihydroxyl-terminated or trihydroxyl-terminated polyether or polyester and less than 1%, relative to the hydroxyl-terminated prepolymer, of a diol or triol, and

b1) an amount of a bisphenol or trisphenol which is essentially equivalent to the NCO content.

15. A composition according to claim 1, containing, as the component B), compounds of the formula IX

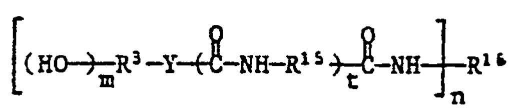

(IX)

in which $R^3$, m and n are as defined in claim 1, Y is —O— or —NH—, t is 0 or 1, $R^{15}$ is the divalent radical of an aliphatic, cycloaliphatic aromatic or araliphatic diisocyanate, after the removal of the isocyanate groups, and $R^{16}$ is the n-valent radical of an amino-terminated polyalkylene ether, after the removal of the terminal $NH_2$

group.

16. A composition according to claim 15, wherein m is 1, n is 2 or 3, Y is —O—, $R^{15}$ is derived from an aliphatic, cycloaliphatic or aromatic diisocyanate and $R^{16}$ is a divalent or trivalent radical of an amino-terminated polyalkylene ether having a molecular weight of 150 to 10,000, after the removal of the terminal amino groups.

17. A composition according to claim 15, wherein m is 1, n is 2, t is 0, Y is —O— and $R^{16}$ is derived from a divalent, amino-terminated polyalkylene ether having a molecular weight of 150 to 6,000.

18. A composition according to claim 15, wherein m and t are 1, n is 2, $R^{15}$ is the divalent radical of an aliphatic or cycloaliphatic diisocyanate, after the removal of the isocyanate groups, and $R^{16}$ is derived from a divalent, amino-terminated polyalkylene ether having a molecular weight of 150 to 6,000.

19. A composition containing components A) and B) according to claim 1 and C) an epoxide resin having at least two 1,2-epoxide groups per molecule ; or containing an adduct formed from component A) and an epoxide resin and also component B) and, if appropriate, component C) ; or containing component A), an adduct formed from component B) and an epoxide resin and, if appropriate component C) ; or containing an adduct formed from component A) and an epoxide resin, an adduct formed from component B) and an epoxide resin, and, if appropriate, component C).

20. A composition according to claim 19, wherein component C) is a polyglycidyl ether of bisphenols, of novolaks formed by reacting formaldehyde with a phenol, or of aliphatic diols, and is also an adduct of bisphenol A and glycidylized aliphatic diols.

21. A process for curing compositions containing components A), B) and C) according to claim 19 by adding a curing agent D) which is active at room temperature or at elevated temperatures and, if appropriate, a curing accelerator E) and, if appropriate, by heating, wherein the proportion of A) and B) amounts to more than 50% by weight, relative to the weight of A), B) and C).

22. A cured product which can be obtained by curing the compositions according to claim 19.

23. The use of the compositions according to claim 19 as adhesives, adhesive films, patches, matrix resins, lacquers or sealing compositions.

**Claims for the following Contracting State : ES**

1. A composition comprising

A) a copolymer based on at least one 1,3-diene and at least one polar, ethylenically unsaturated comonomer, and

B) a compound of the formula I

$$R^1 \left[ X - \overset{O}{\overset{\|}{C}} - Y - R^2 - (OH)_m \right]_n \qquad (I)$$

in which m is 1 or 2, n is 2 to 6,

$R^1$ is the n-valent radical of an elastomeric prepolymer, after the removal of the terminal isocyanate, amino or hydroxyl groups, which is soluble or dispersible in epoxide resins, X and Y independently of one another are —O— or —$NR^3$—, it being necessary for at least one of these groups to be —$NR^3$—,

$R^2$ is an m + 1-valent radical of polyphenol or aminophenol after the removal of the phenolic hydroxyl groups and optionally of the amino group, and

$R^3$ is hydrogen, $C_1$-$C_6$alkyl or phenol.

2. A composition according to claim 1, wherein component A) is a copolymer based on butadiene.

3. A composition according to claim 1, wherein component A) is a copolymer based on butadiene/acrylonitrile, butadiene/(meth)acrylic acid esters, a butadiene/acrylonitrile/styrene graft copolymer (ABS) or a butadiene/methyl methacrylate/styrene graft copolymer (MBS).

4. A composition according to claim 1, wherein component A) is a liquid butadiene/acrylonitrile copolymer.

5. A composition according to claim 1, wherein component A) is employed in the form of an adduct, of a butadiene/acrylonitrile copolymer having functional groups which are reactive towards epoxide resins, onto an epoxide resin.

6. A composition according to claim 1, in which the radical $R^2$ is derived from a bisphenol of the formula VI

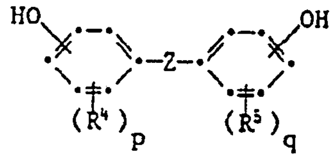

(VI)

in which Z is a direct C-C bond or a bridge member selected from the group consisting of —$CR^6R^7$, —O—, —S—, —$SO_2$—, —CO—, —COO—, —$CONR^8$— and —$SiR^9R^{10}$—, $R^4$ and $R^5$ independently of one another are $C_1$-$C_{20}$alkyl, $C_2$-$C_6$alkenyl, $C_2$-$C_6$alkinyl or halogen, p and q independently of one another are 0, 1 or 2, $R^6$, $R^7$ and $R^8$ independently of one another are hydrogen, —$CF_3$ or $C_1$-$C_6$alkyl, or $R^6$ and $R^7$, together with the common C atom, form a cycloaliphatic radical having 5-12 ring C atoms, and $R^9$ and $R^{10}$ are $C_1$-$C_6$alkyl.

7. A composition according to claim 1, wherein X is —NH— and Y is —NH— or —O—.

8. A composition according to claim 1, wherein component B) is a compound of the formula I which is essentially free from isocyanate groups, contains at least two free phenolic hydroxyl groups and can be obtained by reacting

a) a prepolymer polyisocyanate which

a1) is an adduct of a polyisocyanate onto a prepolymer polyhydroxyl or polysulfhydryl compound or a mixture of such compounds, if appropriate, in combination with a chain lengthener, or

a2) is derived from a prepolymer polyether amine, with

b) at least one phenol having two or three phenolic hydroxyl groups or an aminophenol having one or two phenolic hydroxyl groups.

9. A composition according to claim 8, wherein the synthesis component for the preparation of component a1) is a hydroxyl-terminated polyether or polyester.

10. A composition according to claim 8, wherein the synthesis component for the preparation of component a1) is a mixture of a hydroxyl-terminated polybutadiene and a hydroxyl-terminated polyalkylene glycol, or is a hydroxyl-terminated polyalkylene glycol having grafted-on 1-olefins.

11. A composition according to claim 8, wherein the polyisocyanate for the preparation of the component a1) is an aliphatic or cycloaliphatic diisocyanate.

12. A composition according to claim 1, containing as component B) compounds of the formula VII

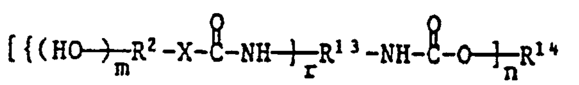

(VII)

in which $R^2$, m and n are as defined in claim 1, r is an integer between 1 and 3, X is —O— or —NH—, $R^{13}$ is the r + 1-valent radical of an aliphatic, cycloaliphatic, aromatic or araliphatic polyisocyanate after the removal of the isocyanate groups, $R^{14}$ is an n-valent, hydroxyl-terminated polyester or polyether radical after the removal of the terminal OH groups, subject to the proviso that the index m and the radicals $R^2$ and $R^{13}$ can be different within a given molecule.

13. A composition according to claim 12, in which m is 1, n is 2 or 3, r is 1, X is —O—, $R^{13}$ is derived from an aliphatic or cycloaliphatic diisocyanate and $R^{14}$ is a divalent or trivalent radical of a polyalkylene ether-polyol having a molecular weight of 150 to 3,000, after the removal of the terminal hydroxyl groups.

14. A composition according to claim 8, wherein component B) can be obtained by reacting

a1) an adduct of an essentially equivalent amount of a diisocyanate with a mixture of a dihydroxyl-terminated or trihydroxyl-terminated polyether or polyester and less than 1%, relative to the hydroxyl-terminated prepolymer, of a diol or triol, and

b1) an amount of a bisphenol or trisphenol which is essentially equivalent to the NCO content.

15. A composition according to claim 1, containing, as the component B), compounds of the formula IX

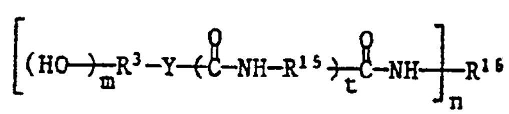

(IX)

in which $R^3$, m and n are as defined in claim 1, Y is —O— or —NH—, t is 0 or 1, $R^{15}$ is the divalent radical of an aliphatic, cycloaliphatic, aromatic or araliphatic diisocyanate, after the removal of the isocyanate groups, and $R^{16}$ is the n-valent radical of an amino-terminated polyalkylene ether, after the removal of the terminal $NH_2$

group.

16. A composition according to claim 15, wherein m is 1, n is 2 or 3, Y is —O—, $R^{15}$ is derived from an aliphatic, cycloaliphatic or aromatic diisocyanate and $R^{16}$ is a divalent or trivalent radical of an amino-terminated polyalkylene ether having a molecular weight of 150 to 10,000, after the removal of the terminal amino groups.

17. A composition according to claim 15, wherein m is 1, n is 2, t is 0, Y is —O— and $R^{16}$ is derived from a divalent, amino-terminated polyalkylene ether having a molecular weight of 150 to 6,000.

18. A composition according to claim 15, wherein m and t are 1, n is 2, $R^{15}$ is the divalent radical of an aliphatic or cycloaliphatic diisocyanate, after the removal of the isocyanate groups, and $R^{16}$ is derived from a divalent, amino-terminated polyalkylene ether having a molecular weight of 150 to 6,000.

19. A composition containing components A) and B) according to claim 1 and C) an epoxide resin having at least two 1,2-epoxide groups per molecule ; or containing an adduct formed from component A) and an epoxide resin and also component B) and, if appropriate, component C) ; or containing component A), an adduct formed from component B) and an epoxide resin and, if appropriate component C) ; or containing an adduct formed from component A) and an epoxide resin, an adduct formed from component B) and an epoxide resin, and, if appropriate, component C).

20. A composition according to claim 19, wherein component C) is a polyglycidyl ether of bisphenols, of novolaks formed by reacting formaldehyde with a phenol, or of aliphatic diols, and is also an adduct of bisphenol A and glycidylized aliphatic diols.

21. A process for curing compositions containing components A), B) and C) or adducts of these components according to claim 19 by adding a curing agent D) which is active at room temperature or at elevated temperatures and, if appropriate, a curing accelerator E) and, if appropriate, heating, in order to cure the composition.

22. A process according to claim 21, wherein the proportion of A) and B) amounts to more than 50% by weight, relative to the weight of A), B) and C).

23. The use of the compositions according to claim 19 as adhesives, adhesive films, patches, matrix resins, lacquers or sealing compositions.

## Revendications

## Revendications pour les Etats contractants suivants : BE, CH, DE, FR, GB, IT, LI, NL, SE

1. Compositions qui comprennent :

A) un copolymère à base d'un ou de plusieurs 1,3-diènes et d'un ou plusieurs comonomères éthyléniques polaires, avec

B) un composé de formule I ci-dessous :

$$R^1 \left[ X - \overset{O}{\overset{\|}{C}} - Y - R^2 - (OH)_m \right]_n \qquad (I),$$

dans laquelle m est le nombre 1 ou 2, n un nombre de 2 à 6,

$R^1$ le radical de valence n d'un prépolymère élastomère soluble ou pouvant être dispersé dans des résines époxydes, résultant de l'élimination des groupes terminaux isocyanate, amino ou hydroxyle,

X et Y désignent chacun, indépendamment l'un de l'autre, l'oxygène ou un groupe —$NR^3$—, l'un des deux au moins devant être un groupe —$NR^3$—,

$R^2$ est un radical de valence m + 1 d'un polyphénol ou d'un aminophénol résultant de l'élimination des hydroxyles phénoliques et le cas échéant du groupe amino, et

$R^3$ représente l'hydrogène, un alkyle en $C_1$-$C_6$ ou le groupe phényle.

2. Compositions selon la revendication 1 dont le composant A) est un copolymère à base de butadiène.

3. Compositions selon la revendication 1 dont le composant A) est un copolymère à base de butadiène et d'acrylonitrile ou de butadiène et d'un ester d'acide acrylique ou méthacrylique ou bien un copolymère de greffage butadiène-acrylonitrile-styrène (ABBS) ou butadièneméthacrylate de méthyle-styrène (MBS).

4. Compositions selon la revendication 1 dont le composant A) est un copolymère liquide du butadiène et de l'acrylonitrile.

5. Compositions selon la revendication 1 dont le composant A) est un produit d'addition à une résine époxyde d'un copolymère de butadiène et d'acrylonitrile à groupes fonctionnels réactifs à l'égard de résines époxydes.

6. Compositions selon la revendication 1 dans lesquelles le radical $R^2$ provient d'un bisphénol de formule VI

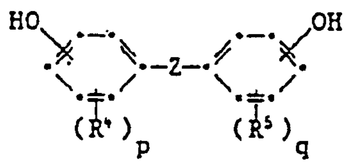

(VI),

dans laquelle Z représente une liaison directe C-C ou un terme formant pont pris parmi les suivants : $—CR^6R^7—$, $—O—$, $—S—$, $—SO_2—$, $—CO—$, $—COO—$, $—CONR^8—$ et $—SiR^9R^{10}—$, $R^4$ et $R^5$ désignent chacun indépendamment l'un de l'autre un alkyle en $C_1$-$C_{20}$, un alcényle ou un alcynyle en $C_2$-$C_6$ ou un halogène et p et q, indépendamment l'un de l'autre, le nombre 0, 1 ou 2, $R^6$, $R^7$ et $R^8$, indépendamment les uns des autres, étant l'hydrogène, un groupe $—CF_3$ ou un alkyle en $C_1$-$C_6$, ou bien $R^6$ et $R^7$ formant ensemble et avec l'atome de carbone commun un radical cycloaliphatique pouvant avoir de 5 à 12 atomes de carbone dans le cycle, et $R^9$ et $R^{10}$ étant des alkyles en $C_1$-$C_6$.

7. Compositions selon la revendication 1 dans lequelles X est le groupe —NH— et Y le groupe —NH— ou un atome d'oxygène.

8. Compositions selon la revendication 1 dont le composant B) est un composé de formule I essentiellement sans groupes isocyanate avec au moins deux hydroxyles phénoliques libres et que l'on peut obtenir en faisant réagir :

a) un polyisocyanate prépolymère qui est

a1) un produit d'addition d'un polyisocyanate sur un composé prépolymère polyhydroxylique ou polysulfhydrylique ou sur un mélange de tels composés, éventuellement associé à un agent d'allongement de chaînes, ou bien

a2) qui provient d'une polyétheramine prépolymère, avec

b) un ou plusieurs phénols à deux ou trois hydroxyles phénoliques ou aminophénols à un ou deux hydroxyles phénoliques.

9. Compositions selon la revendication 8 pour lesquelles le composant de structure servant à former le composant a1) est un polyéther ou un polyester à terminaison hydroxylique.

10. Compositions selon la revendication 8 pour lesquelles le composant servant à former le composant a1) est un mélange d'un polybutadiène à terminaison hydroxylique et d'un polyalkylène-glycol à terminaison hydroxylique ou bien un polyalkylène-glycol à terminaison hydroxylique auquel ont été greffées des 1-olefines.

11. Compositions selon la revendication 8 dans lesquelles le polyisocyanate servant à former le composant a1) est un diisocyanate aliphatique ou cycloaliphatique.

12. Compositions selon la revendication 1 dont le composant B) est un composé de formule VII :

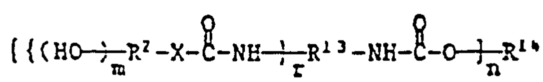

(VII)

dans laquelle $R^2$, m et n ont les significations indiquées à la revendication 1, r est un entier de 1 à 3, X un atome d'oxygène ou le groupe —NH—, $R^{13}$ le radical de valence r + 1 d'un polyisocyanate aliphatique, cycloaliphatique, aromatique ou araliphatique résultant de l'élimination des groupes isocyanate, et $R^{14}$ un radical de valence n d'un polyester ou d'un polyéther à terminaison hydroxylique résultant de l'élimination des groupes OH terminaux, avec la condition que l'indice m et les radicaux $R^2$ et $R^{13}$ puissent différer dans une même molécule.

13. Compositions selon la revendication 12 dans lesquelles m = 1, n = 2 ou 3, r = 1, X est un atome d'oxygène, $R^{13}$ provient d'un diisocyanate aliphatique ou cycloaliphatique et $R^{14}$ est le radical divalent ou trivalent d'un polyoxyalkylène-polyol de masse moléculaire 150 à 3000, résultant de l'élimination des groupes hydroxyliques terminaux.

14. Compositions selon la revendication 8 dont le composant B) est obtenu par réaction de :

a1) un produit d'addition d'une proportion essentiellement équivalente d'un diisocyanate avec un mélange d'un polyéther ou d'un polyester à terminaison dihydroxylique ou trihydroxylique et de moins de 10, du poids du prépolymère à terminaison hydroxylique, d'un diol ou d'un triol, et

b1) d'une proportion d'un bis-phénol ou d'un tris-phénol essentiellement équivalente à la teneur en groupes NCO.

15. Compositions selon la revendication 1 qui contiennent comme composant B) des composés de formule IX ci-dessous :

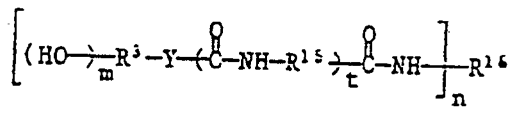

(IX),

dans laquelle $R^3$, m et n ont les significations qui ont été indiquées à la revendication 1, Y représente —O— ou —NH—, t = 0 ou 1, $R^{15}$ est le radical divalent d'un diisocyanate aliphatique, cycloaliphatique, aromatique ou araliphatique résultant de l'élimination ries groupes isocyanate, et $R^{16}$ le radical de valence n d'un polyoxyalkylène à terminaison aminée résultant de l'élimination des groupes $NH_2$ terminaux.

16. Compositions selon la revendication 15 dans lequelles m = 1, n = 2 ou 3, Y est un atome d'oxygène, $R^{15}$ provient d'un diisocyanate aliphatique, cycloaliphatique ou aromatique et $R^{16}$ est le radical divalent ou trivalent d'un polyoxyalkylène à terminaison aminée de masse moléculaire 150 à 10000, résultant de l'élimination des groupes amino terminaux.

17. Compositions selon la revendication 15 dans lesquelles m = 1, n = 2, t = 0, Y est un atome d'oxygène et $R^{16}$ le radical divalent d'un polyoxyalkylène à terminaison aminée de masse moléculaire de 150 à 6000.

18. Compositions selon la revendication 15 dans lesquelles m et t égal 1, n = 2, $R^{15}$ est le radical divalent d'un diisocyanate aliphatique ou cycloaliphatique résultant de l'élimination des groupes isocyanate et $R^{16}$ le radical divalent d'un polyoxyalkylène à terminaison aminée de masse moléculaire de 150 à 6000.

19. Compositions qui contiennent des composants A) et B) selon la revendication 1 avec en plus un composant C) qui est une résine époxyde ayant au moins deux groupes 1,2-époxy par molécule ; ou bien qui contiennent un produit d'addition d'un composant A) et d'une résine époxyde, un composant B) et le cas échéant un composant C) ; ou qui contiennent le composant A), un produit d'addition du composant B) et d'une résine époxyde et le cas échéant le composant C) ; ou encore qui contiennent un produit d'addition du composant A) et d'une résine époxyde, un produit d'addition du composant B) et d'une résine époxyde et le cas échéant le composant C).

20. Compositions selon la revendication 19 dont le composant C) est un éther polyglycidylique de bisphénols, de novolaques formées par réaction du formaldéhydé avec un phénol, ou de diols aliphatiques, ou bien un produit d'addition du bisphénol A) et d'un diol aliphatique glycidylé.

21. Procédé pour durcir des compositions contenant les composants A), B) et C) selon la revendication 19 par addition d'un durcisseur D) actif à la température ambiante ou à une température plus élevée et le cas échéant d'un accélérateur de durcissement E), avec éventuellement chauffage, procédé caractérisé en ce que la proportion des composants A) et B) représente plus de 50% du poids des composants A) B) et C).

22. Les produits durcis qui ont été obtenus par durcissement des compositions selon la revendication 19.

23. L'emploi des compositions selon la revendication 19 comme adhésifs, pellicules collantes, pièces de réparation, résines pour matrices, vernis ou produits d'étanchéification.

**Revendications pour l'Etat contractant suivant : ES**

1. Compositions qui comprennent :

A) un copolymère à base d'un ou de plusieurs 1,3-diènes et d'un ou plusieurs comonomères éthyléniques polaires, avec

B) un composé de formule I ci-dessous :

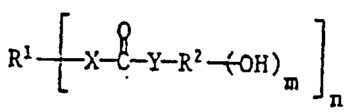

(I),

dans laquelle m est le nombre 1 ou 2, n un nombre de 2 à 6,

$R^1$ le radical de valence n d'un prépolymère élastomère soluble ou pouvant être dispersé dans des résines époxydes, résultant de l'élimination des groupes terminaux isocyanate, amino ou hydroxyle,

X et Y désignent chacun, indépendamment l'un de l'autre, l'oxygène ou un groupe —$NR^3$—, l'un des deux au moins devant être un groupe —$NR^3$—,

$R^2$ est un radical de valence m + 1 d'un polyphénol ou d'un aminophénol résultant de l'élimination des hydroxyles phénoliques et le cas échéant du groupe amino, et

$R^3$ représente l'hydrogène, un alkyle en $C_1$-$C_6$ ou le groupe phényle.

2. Compositions selon la revendication 1 dont le composant A) est un copolymère à base de butadiène.

3. Compositions selon la revendication 1 dont le composant A) est un copolymère à base de butadiène et d'acrylonitrile ou de butadiène et d'un ester d'acide acrylique ou méthacrylique ou bien un copolymère de greffage butadiène-acrylonitrile-styrène (ABBS) ou butadièneméthacrylate de méthyle-styrène (MBS).

4. Compositions selon la revendication 1 dont le composant A) est un copolymère liquide du butadiène et de l'acrylonitrile.

5. Compositions selon la revendication 1 dont le composant A) est un produit d'addition à une résine époxyde d'un copolymère de butadiène et d'acrylonitrile à groupes fonctionnels réactifs à l'égard de résines époxydes.

6. Compositions selon la revendication 1 dans lesquelles le radical $R^2$ provient d'un bisphénol de formule VI :

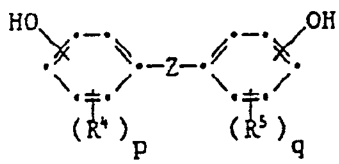

(VI),

dans laquelle Z représente une liaison directe C-C ou un terme formant pont pris parmi les suivants : $-CR^6R^7-$, $-O-$, $-S-$, $-SO_2-$, $-CO-$, $-COO-$, $-CONR^8-$ et $-SiR^9R^{10}-$, $R^4$ et $R^5$ désignent chacun indépendamment l'un de l'autre un alkyle en $C_1$-$C_{20}$, un alcényle ou un alcynyle en $C_2$-$C_6$ ou un halogène et p et q, indépendamment l'un de l'autre, le nombre 0, 1 ou 2, $R^6$, $R^7$ et $R^8$, indépendamment les uns des autres, étant l'hydrogène, un groupe $-CF_3$ ou un alkyle en $C_1$-$C_6$, ou bien $R^6$ et $R^7$ formant ensemble et avec l'atome de carbone commun un radical cycloaliphatique pouvant avoir de 5 à 12 atomes de carbone dans le cycle, et $R^9$ et $R^{10}$ étant des alkyles en $C_1$-$C_6$.

7. Compositions selon la revendication 1 dans lequelles X est le groupe $-NH-$ et Y le groupe $-NH-$ ou un atome d'oxygène.

8. Compositions selon la revendication 1 dont le composant B) est un composé de formule I essentiellement sans groupes isocyanate avec au moins deux hydroxyles phénoliques libres et que l'on peut obtenir en faisant réagir :

a) un polyisocyanate prépolymère qui est

a1) un produit d'addition d'un polyisocyanate sur un composé prépolymère polyhydroxylique ou polysulfhydrylique ou sur un mélange de tels composés, éventuellement associé à un agent d'allongement de chaînes, ou bien

a2) qui provient d'une polyétheramine prépolymère avec

b) un ou plusieurs phénols à deux ou trois hydroxyles phénoliques ou aminophénols à un ou deux hydroxyles phénoliques.

9. Compositions selon la revendication 8 pour lesquelles le composant de structure servant à former le composant a1) est un polyéther ou un polyester à terminaison hydroxylique.

10. Compositions selon la revendication 8 pour lesquelles le composant servant à former le composant a1) est un mélange d'un polybutadiène à terminaison hydroxylique et d'un polyalkylène-glycol à terminaison hydroxylique ou bien un polyalkylène-glycol à terminaison hydroxylique auquel ont été greffées des 1-oléfines.

11. Compositions selon la revendication 8 dans lesquelles le polyisocyanate servant à former le composant a1) est un diisocyanate aliphatique ou cycloaliphatique.

12. Compositions selon la revendication 1 dont le composant B) est un composé de formule VII :

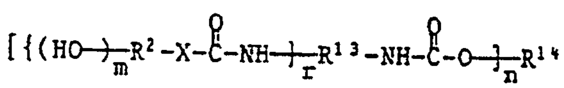

(VII)

dans laquelle $R^2$, m et n ont les significations indiquées à la revendication 1, r est un entier de 1 à 3, X un atome d'oxygène ou le groupe $-NH-$, $R^{13}$ le radical de valence r + 1 d'un polyisocyanate aliphatique, cycloaliphatique, aromatique ou araliphatique résultant de l'élimination des groupes isocyanate, et $R^{14}$ un radical de valence n d'un polyester ou d'un polyéther à terminaison hydroxylique résultant de l'élimination des groupes OH terminaux, avec la condition que l'indice m et les radicaux $R^2$ et $R^{13}$ puissent différer dans une même molécule.

13. Compositions selon la revendication 12 dans lequelles m = 1, n = 2 ou 3, r = 1, X est un atome d'oxygène, $R^{13}$ provient d'un diisocyanate aliphatique ou cycloaliphatique et $R^{14}$ est le radical divalent ou trivalent d'un polyoxyalkylène-polyol de masse moléculaire 150 à 3000, résultant de l'élimination des groupes hydroxyliques terminaux.

14. Compositions selon la revendication 8 dont le composant B) est obtenu par réaction de :

a1) un produit d'addition d'une proportion essentiellement équivalente d'un diisocyanate avec un mélange d'un polyéther ou d'un polyester à terminaison dihydroxylique ou trihydroxylique et de moins de 1%, du poids du prépolymère à terminaison hydroxylique, d'un diol ou d'un triol, et,

b1) d'une proportion d'un bis-phénol ou d'un tris-phénol essentiellement équivalente à la teneur en groupes NCO.

15. Compositions selon la revendication 1 qui contiennent comme composant B) des composés de formule IX ci-dessous :

$$\left[ (HO)_m R^3-Y-\left(\overset{O}{\overset{\|}{C}}-NH-R^{15}\right)_t \overset{O}{\overset{\|}{C}}-NH \right]_n R^{16} \qquad (IX),$$

dans laquelle $R^3$, m et n ont les significations qui ont été indiquées à la revendication 1, Y représente —O— ou —NH—, t = 0 ou 1, $R^{15}$ est le radical divalent d'un diisocyanate aliphatique, cycloaliphatique, aromatique ou araliphatique résultant de l'élimination des groupes isocyanate, et $R^{16}$ le radical de valence n d'un polyoxyalkylène à terminaison aminée résultant de l'élimination des groupes $NH_2$ terminaux.

16. Compositions selon la revendication 15 dans lequelles m = 1, n = 2 ou 3, Y est un atome d'oxygène, $R^{15}$ provient d'un diisocyanate aliphatique, cycloaliphatique ou aromatique et $R^{16}$ est le radical divalent ou trivalent d'un polyoxyalkylène à terminaison aminée de masse moléculaire 150 à 10000, résultant de l'élimination des groupes amino terminaux.

17. Compositions selon la revendication 15 dans lesquelles m = 1, n = 2, t = 0, Y est un atome d'oxygène et $R^{16}$ le radical divalent d'un polyoxyalkylène à terminaison aminée de masse moléculaire de 150 à 6000.

18. Compositions selon la revendication 15 dans lesquelles m et t égal 1, n = 2, $R^{15}$ est le radical divalent d'un diisocyanate aliphatique ou cycloaliphatique résultant de l'élimination des groupes isocyanate et $R^{16}$ le radical divalent d'un polyoxyalkylène à terminaison aminée de masse moléculaire de 150 à 6000.

19. Compositions qui contiennent des composants A) et B) selon la revendication 1 avec en plus un composant C) qui est une résine époxyde ayant au moins deux groupes 1,2-époxy par molécule ; ou bien qui contiennent un produit d'addition d'un composant A) et d'une résine époxyde, un composant B) et le cas échéant un composant C) ; ou qui contiennent le composant A), un produit d'addition du composant B) et d'une résine époxyde et le cas échéant le composant C) ; ou encore qui contiennent un produit d'addition du composant A) et d'une résine époxyde, un produit d'addition du composant B) et d'une résine époxyde et le cas échéant le composant C).

20. Compositions selon la revendication 19 dont le composant C) est un éther polyglycidylique de bisphénols, de novolaques formées par réaction du formaldéhyde avec un phénol, ou de diols aliphatiques, ou bien un produit d'addition du bisphénol A) et d'un diol aliphatique glycidylé.

21. Procédé pour durcir des compositions contenant des composants A), B) et C) ou des produits d'addition de ces composants selon la revendication 19, procédé selon lequel on leur ajoute un durcisseur D) actif à la température ambiante ou à une température plus élevée et le cas échéant un accélérateur de durcissement E), et éventuellement on chauffe le mélange pour durcir la composition.

22. Procédé selon la revendication 21, carcactérisé en ce que la proportion des composants A) et B) représente plus de 50% du poids des composants A), B) et C).

23. L'emploi des compositions selon la revendication 19 comme adhésifs, pellicules collantes, pièces de réparation, résines pour matrices, vernis ou produits d'étanchéification.